# EUROPEAN PATENT APPLICATION

(11) **EP 4 817 923 A1**
(43) Date of publication of application: **07.10.2026**
(21) Application number: 26167447.7
(22) Date of filing: 25.03.2026
(51) Int. Cl.: B60K 35/22, B01D 46/80, B60K 35/28, B60K 35/215, F01N 3/021

(54) **INFORMATION DISPLAY SYSTEM, WORK VEHICLE, INFORMATION DISPLAY METHOD, AND COMPUTER PROGRAM**

(30) Priority: 26.03.2025 JP 2025051184
(71) Applicant: Kubota Corporation, Osaka-shi, Osaka 530-0011 (JP)
(72) Inventor: HORAI, Kohei, Sakai-shi, Osaka, 590-0908 (JP); FUJIWARA, Takashi, Sakai-shi, Osaka, 590-0908 (JP)
(74) Representative: Müller-Boré & Partner Patentanwälte PartG mbB

(57) **Abstract**

An information display system for a work vehicle includes a meter panel including a digital display and a controller configured or programmed to control operation of the meter panel. The work vehicle includes a DPF and a sensor to detect an accumulation amount of PM in the DPF. During DPF regeneration, the controller is configured or programmed to calculate progress of the DPF regeneration based on at least one of an output signal from the sensor or an elapsed time, and cause the digital display to display progress information indicating the calculated progress. When a predetermined condition is satisfied during display of the progress information, the controller is configured or programmed to stop displaying the progress information and instead cause the digital display to display a message relating to the DPF regeneration. When display of the message ends, the controller is configured or programmed to resume displaying the progress information.

## Description

### CROSS REFERENCE TO RELATED APPLICATIONS

This application claims the benefit of priority to Japanese Patent Application No. 2025-051184 filed on March 26, 2025. The entire contents of this application are hereby incorporated herein by reference.

### BACKGROUND OF THE INVENTION

### 1. Field of the Invention

The present invention relates to information display systems, work vehicles, information display methods, and computer programs.

### 2. Description of the Related Art

Research and development of smart agriculture using information and communication technology (ICT) and the Internet of Things (loT) as next-generation agriculture are underway. Automated and unmanned operations of agricultural work vehicles, such as tractors used in fields, have also been studied and developed. For example, work vehicles that travel by automatic steering using a positioning system such as a global navigation satellite system (GNSS), which enables precise positioning, have been put into practical use.

A meter panel is provided in front of the operator's seat of an agricultural work vehicle such as a tractor, and displays travel speed, engine load, and various operating states of the work vehicle to the operator.

Japanese Laid-Open Patent Publication No. 2012-32209 describes a commonly used meter unit for passenger cars.

### SUMMARY OF THE INVENTION

A meter panel provided in a work vehicle such as a tractor is required to accurately notify the operator of various information regarding the vehicle while the vehicle is traveling or performing work. In addition, since such a work vehicle performs various operations outdoors, it is necessary to display more information than in general passenger vehicles.

There is an increasing demand for such meter panels not only for agricultural work vehicles but also for construction work vehicles used at construction sites. Hereinafter, vehicles used for specific tasks, such as mobile agricultural machines and construction machines, are collectively referred to as "work vehicles."

There is a need to further improve operator convenience through information displayed on meter panels of work vehicles.

Example embodiments of the present invention provide solutions described below.

An information display system for a work vehicle includes a meter panel including a digital display, and a controller configured or programmed to control operation of the meter panel, wherein the work vehicle includes a diesel particulate filter (DPF) and a sensor to detect an accumulation amount of particulate matter (PM) in the DPF, during execution of DPF regeneration, the controller is configured or programmed to calculate a degree of progress of the DPF regeneration based on at least one of an output signal from the sensor or an elapsed time, cause the digital display to display progress information indicating the calculated degree of progress, when a predetermined condition is satisfied during display of the progress information, stop displaying the progress information and instead cause the digital display to display a message relating to the DPF regeneration, and when display of the message ends, resume displaying the progress information.

In an information display system, wherein after causing the digital display to display the message, the controller is configured or programmed to end the display of the message and resume displaying the progress information when a predetermined time has elapsed or in response to an instruction from a user.

In an information display system, during execution of the DPF regeneration, the controller is configured or programmed to determine whether to interrupt the DPF regeneration based on an output signal from the sensor or another sensor of the work vehicle, and when interrupting the DPF regeneration, stop displaying the progress information and cause the digital display to display the message.

In an information display system, the DPF regeneration is parked regeneration that is started in response to a user's operation while the work vehicle is parked, the predetermined condition includes a condition for interrupting the parked regeneration, and when the predetermined condition is satisfied and the DPF regeneration is interrupted during display of the progress information, the controller is configured or programmed to stop displaying the progress information and cause the digital display to display a message indicating interruption of the DPF regeneration.

In an information display system, the DPF regeneration is automatic regeneration that is automatically started during operation of the work vehicle, the predetermined condition includes a user operation, during execution of the automatic regeneration, to start parked regeneration that is DPF regeneration performed while the work vehicle is parked, and when the predetermined condition is satisfied during display of the progress information, the controller is configured or programmed to stop displaying the progress information and cause the digital display to display a message indicating start of the parked regeneration.

In an information display system, the controller is configured or programmed to cause the digital display to display travel state information including information on a traveling direction, transmission state, and vehicle speed of the work vehicle, and maintain the display of the travel state information regardless of whether the progress information is displayed and whether the message is displayed.

In an information display system, the digital display includes a first display area, a second display area, and a third display area that do not overlap each other, the controller is configured or programmed to cause the travel state information to be displayed in the first display area, cause the message to be displayed in the second display area, cause the progress information to be displayed in the third display area, and during display of the message, stop displaying the progress information in the third display area while maintaining the display of the travel state information in the first display area.

In an information display system, the first display area is a horizontally extending band-shaped area, the second display area is located below the first display area, and the third display area is located below the second display area.

In an information display system, the digital display further includes a fourth display area adjacent to the second display area and the third display area, and during execution of the DPF regeneration, the controller is configured or programmed to cause a gauge indicating that the DPF regeneration is in progress to be displayed in the fourth display area.

In an information display system, the third display area includes a plurality of sub-areas arranged in a horizontal direction, and the controller is configured or programmed to cause the progress information to be displayed in a sub-area closest to the fourth display area among the plurality of sub-areas.

In an information display system, the controller is configured or programmed to cause information including a gauge indicating the progress and a numerical value representing the progress as a percentage to be displayed on the digital display as the progress information.

A work vehicle includes any of the information display systems described above.

The work vehicle is a mobile agricultural machine.

A computer-implemented method causes a digital display in a work vehicle to display information, wherein the work vehicle includes a diesel particulate filter (DPF) and a sensor to detect an accumulation amount of particulate matter (PM) in the DPF, and the method includes, during execution of DPF regeneration, calculating a degree of progress of the DPF regeneration based on at least one of an output signal from the sensor or an elapsed time, causing the digital display to display progress information indicating the calculated degree of progress, when a predetermined condition is satisfied during display of the progress information, stopping the display of the progress information and instead causing the digital display to display a message relating to the DPF regeneration, and when display of the message ends, resuming display of the progress information.

A non-transitory computer-readable medium includes a computer program executable by a computer to cause a digital display in a work vehicle to display information, wherein the work vehicle includes a diesel particulate filter (DPF) and a sensor to detect an accumulation amount of particulate matter (PM) in the DPF, the computer program causes the computer to perform, during execution of DPF regeneration, calculating a degree of progress of the DPF regeneration based on at least one of an output signal from the sensor or an elapsed time, causing the digital display to display progress information indicating the calculated degree of progress, when a predetermined condition is satisfied during display of the progress information, stopping the display of the progress information and instead causing the digital display to display a message relating to the DPF regeneration, and when display of the message ends, resuming display of the progress information.

Comprehensive or specific example embodiments of the present disclosure may be realized by a device, system, method, integrated circuit, computer program, or non-transitory computer-readable medium, or any combination thereof. The computer-readable medium may include volatile and/or non-volatile storage media. The device may include a plurality of devices. When the device includes two or more devices, the two or more devices may be provided in a single apparatus or may be separately provided in two or more apparatuses.

During execution of DPF regeneration, the work operation may be changed or temporarily interrupted. In order to enhance user convenience, it is desirable to enable the user to easily predict when the DPF regeneration will be completed.

According to an example embodiment of the present disclosure, the controller is configured or programmed to calculate the degree of progress of DPF regeneration and cause the digital display of the meter panel to display information indicating the regeneration progress. By viewing the meter panel, the user can easily predict the remaining time until completion of DPF regeneration to facilitate work planning.

The above and other elements, features, steps, characteristics and advantages of the present invention will become more apparent from the following detailed description of the example embodiments with reference to the attached drawings.

### BRIEF DESCRIPTION OF THE DRAWINGS

FIG. **1** is a side view schematically illustrating an example of a work vehicle according to an example embodiment of the present disclosure.
FIG. **2** is a diagram illustrating an example of operation switches and an operation terminal provided inside a cabin of the work vehicle.
FIG. **3** is a front view schematically illustrating a meter panel attached behind the steering wheel located in front of the operator's seat of the work vehicle.
FIG. **4** is a front view illustrating an example of an arrangement of main components of the meter panel.
FIG. **5** is a front view illustrating an example of an arrangement of indicators of the meter panel.
FIG. **6** is a front view illustrating an example of a state in which various information are displayed on the display of the meter panel.
FIG. **7A** is a block diagram schematically illustrating a configuration example of an information display system.
FIG. **7B** is a block diagram schematically illustrating another configuration example of the information display system.
FIG. **8** is a block diagram illustrating a hardware configuration example of the controller.
FIG. **9** is a diagram illustrating an example in which the controller is built in the meter panel.
FIG. **10A** is a front view schematically illustrating an example in which an arc of the same color as the color of light emitted from a light emitting region of an arc-shaped indicator is displayed.
FIG. **10B** is a front view schematically illustrating an example in which an arc of the same color as the color of light emitted from a light emitting region of an arc-shaped indicator, and another graphic element of the same color are displayed.
FIG. **11** is a diagram illustrating an example of a home screen.
FIG. **12** is a diagram schematically illustrating an example of segmentation of display areas.
FIG. **13** is a block diagram illustrating a portion of components of the work vehicle.
FIG. **14** is a diagram illustrating an example of display of information relating to DPF regeneration.
FIG. **15** is a flowchart illustrating an example of operations relating to DPF regeneration.
FIG. **16** is a diagram illustrating a display example of a message indicating that DPF regeneration has started.
FIG. **17** is a diagram illustrating an example of table information.
FIG. **18** is a diagram illustrating a display example of progress information of DPF regeneration.
FIG. **19** is a diagram illustrating a display example of a message indicating that DPF regeneration has been interrupted.
FIG. **20** is a diagram illustrating a display example in which display of progress information is resumed after display of interruption message ends.
FIG. **21** is a diagram illustrating a display example of a message indicating that DPF regeneration has ended.
FIG. **22** is a diagram for explaining a layout of a display screen including the progress information.
FIG. **23** is a flowchart illustrating an example of operations of the controller when a user performs an operation to start parked regeneration during execution of automatic regeneration.
FIG. **24** is a diagram illustrating a display example of a message indicating that automatic regeneration has started.
FIG. **25** is a diagram illustrating another display example of progress information indicating the progress of DPF regeneration.
FIG. **26** is a diagram illustrating still another display example of information indicating the progress of DPF regeneration.

### DETAILED DESCRIPTION OF THE EXAMPLE EMBODIMENTS

Example embodiments of information display systems and work vehicles according to the present disclosure will be described below with reference to the drawings. The same reference numerals used in multiple drawings denote the same or equivalent elements.

The following example embodiments are examples for embodying the technical concepts of the present invention, and the present invention is not limited to the following example embodiments. Descriptions of the size, material, shape, and relative arrangement of components are not intended to limit the scope of the present invention solely thereto, but are intended to be illustrative. The size and positional relationship of members shown in each drawing may be exaggerated for ease of understanding.

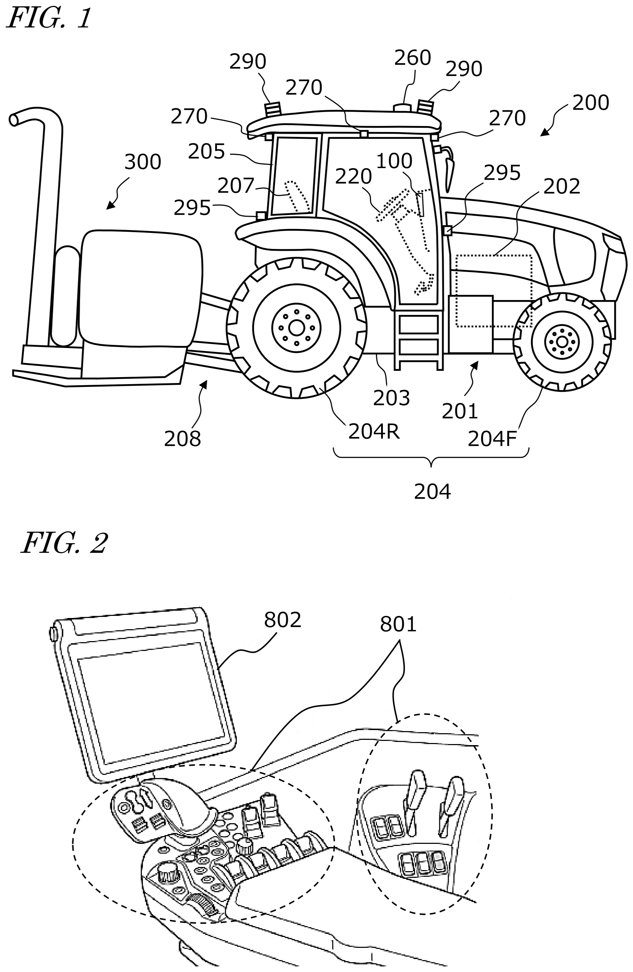

FIG. **1** is a side view schematically illustrating an example of a work vehicle **200** in the present example embodiment. The illustrated work vehicle **200** is a tractor that tows a replaceable implement **300.** The work vehicle **200** may be configured or programmed to travel under manual control, automatic steering, or autonomous driving.

The work vehicle **200** illustrated in FIG. **1** includes a vehicle body **201,** a prime mover (engine) **202,** and a transmission **203.** The vehicle body **201** is provided with running gear including wheels **204** with tires, and a cabin **205.** The running gear includes four wheels **204,** drive axles for the four wheels, and braking devices (brakes) that brake the respective axles. The wheels **204** in this example include a pair of front wheels **204F** and a pair of rear wheels **204R.** One or both of the front wheels **204F** and rear wheels **204R** may be replaced by a plurality of wheels equipped with tracks (crawlers) instead of wheels with tires.

Inside the cabin **205,** a meter panel **100** according to an example embodiment of the present disclosure, an operator's seat **207,** a steering wheel **220,** and operation switches are provided.

FIG. **2** is a diagram illustrating an example of operation switches **801** and an operation terminal **802** provided inside the cabin **205** of the work vehicle **200.** Operation switches **801** including a plurality of switches operable by a user is arranged inside the cabin. The operation switches **801** include, for example, switches for selecting a gear stage of a main gear or a range gear, a switch for switching between forward travel and reverse travel, and a switch for raising and lowering the implement **300.**

The operation terminal **802** is a terminal that allows a user to perform operations related to traveling of the work vehicle **200** and operation of the implement **300,** and is also referred to as a virtual terminal (VT). The operation terminal **802** may include a touch-screen type display and/or one or more buttons. The display may be a liquid crystal display or an organic light-emitting diode (OLED) display, for example.

The work vehicle **200** illustrated in FIG. **1** includes a plurality of external sensors that sense the surroundings of the work vehicle **200.** The external sensors may include various types of sensors such as a plurality of cameras **270,** a plurality of obstacle sensors **295,** and a plurality of LiDAR sensors **290.** The cameras **270** may be provided, for example, at the front, rear, left, and right of the work vehicle **200.** The cameras **270** capture the surrounding environment of the work vehicle **200** and generate image data. Images acquired by the cameras **270** may be transmitted to, for example, a terminal device for remote monitoring. The cameras **270** are provided as needed, and the number thereof is arbitrary. The LiDAR sensors **290** are an example of external sensors that output sensor data indicating the distribution of objects located in the surrounding environment of the work vehicle **200.** In the example of FIG. 1, two LiDAR sensors **290** are disposed at the front and rear of the roof of the cabin **205.** The LiDAR sensors **290** may be provided at other positions (e.g., at the lower front of the vehicle body **201).** Each LiDAR sensor **290** repeatedly outputs sensor data indicating the distance and direction to each measurement point of objects in the surrounding environment, or the three-dimensional coordinate values of each measurement point, while the work vehicle **200** is traveling. The number of LiDAR sensors **290** is not limited to two, and may be one or three or more. In the example of FIG. **1****,** the plurality of obstacle sensors **295** are provided at the front and rear of the cabin **205.** The obstacle sensors **295** may also be disposed at other portions. The obstacle sensors **295** may include, for example, a laser scanner or ultrasonic sensor. The LiDAR sensors **290** and obstacle sensors **295** may be enabled, for example, when the work vehicle **200** travels in an autonomous driving mode.

The cameras **270,** LiDAR sensors **290,** and obstacle sensors **295** are provided as needed, and the number of each is arbitrary. Some of the cameras **270,** LiDAR sensors **290,** and obstacle sensors **295** may be provided in the work vehicle **200.** In cases where they are not necessary, such as when the work vehicle **200** does not have an autonomous driving function, the work vehicle **200** need not include the cameras **270,** LiDAR sensors **290,** and obstacle sensors **295.**

The work vehicle **200** may further include a GNSS unit **260.** GNSS is a general term for satellite positioning systems such as GPS (Global Positioning System), QZSS (Quasi-Zenith Satellite System, e.g., Michibiki), GLONASS, Galileo, and BeiDou. The GNSS unit **260** receives satellite signals (also referred to as GNSS signals) transmitted from a plurality of GNSS satellites and performs positioning based on the satellite signals. The GNSS unit **260** is provided at the top of the cabin **205,** but may be provided at other positions.

The prime mover **202** may be, for example, a diesel engine. An electric motor may be used instead of the diesel engine. The transmission **203** can change the propulsive force and travel speed of the work vehicle **200** through gear shifting. The transmission **203** can also switch between forward travel and reverse travel of the work vehicle **200.**

A coupling device **208** is provided at the rear of the vehicle body **201.** The coupling device **208** includes, for example, a three-point hitch (also referred to as a "three-point linkage"), a Power Take-Off (PTO) shaft, a universal joint, and a communication cable. The implement **300** can be attached to and detached from the work vehicle **200** via the coupling device **208.** The coupling device **208** can, for example, raise and lower the three-point hitch using a hydraulic device to change the position or posture of the implement **300.** Power can also be transmitted from the work vehicle **200** to the implement **300** via the universal joint. The work vehicle **200** can cause the implement **300** to perform a predetermined task while towing the implement **300.** The coupling device may also be provided at the front of the vehicle body **201.** In that case, an implement can be connected to the front of the work vehicle **200.**

Although the implement **300** illustrated in FIG. **1** is a sprayer that sprays agricultural chemicals onto crops, the implement **300** is not limited to a sprayer. For example, any implement **300,** such as a mower, seeder, spreader (fertilizer spreader), rake, baler, harvester, plow, harrow, or rotary tiller, can be connected to the work vehicle **200** for use.

As described above, the work vehicle **200** is equipped with various sensors and performs a variety of tasks together with various implements **300.** In the course of such tasks, it is necessary to provide the operator (user) with various information related to the travel state and work state. For this reason, the information to be displayed on the meter panel **100** may vary significantly depending on the content and stage of the work.

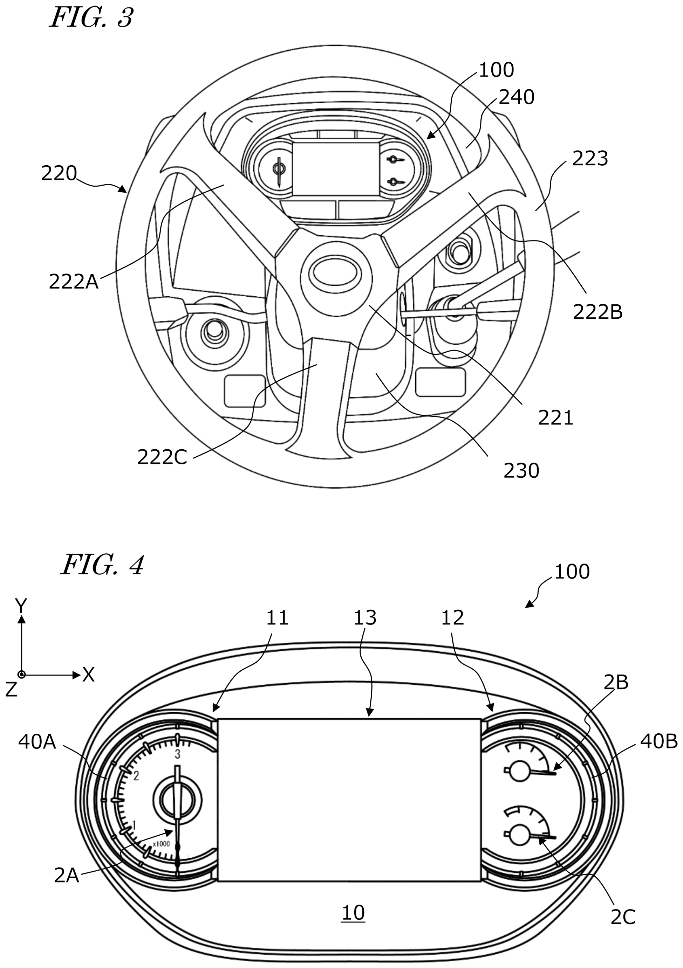

FIG. 3 is a front view schematically illustrating a meter panel **100** attached to a tractor, which is an example of the work vehicle **200,** in the present example embodiment of the present disclosure. In the illustrated example, the meter panel **100** is disposed in front of the operator's seat of the tractor. Specifically, the meter panel **100** is fitted into an opening of a meter cover **240** above a steering column **230** that rotatably supports a steering wheel **220.** The steering wheel **220** in this example includes a central hub (horn cover) **221,** three spokes **222A, 222B, 222C** extending radially from the horn cover **221,** and a rim **223** supported by the spokes **222A, 222B, 222C.** The meter panel **100** is provided at a position visible to the operator seated in the seat. In the example of FIG. **3****,** various information displayed on the meter panel **100** is visible through the opening between the spokes **222A** and **222B.**

FIG. **4** is a front view illustrating an example of the arrangement of the main components of the meter panel **100** according to the present example embodiment. FIG. **4** shows mutually orthogonal X-, Y-, and Z-axes for reference as a right-hand coordinate system. In the present specification, the positive direction of the Y-axis may be referred to as upward, the negative direction of the Y-axis as downward, the positive direction of the X-axis as rightward, the negative direction of the X-axis as leftward, the positive direction of the Z-axis as the front direction, and the negative direction of the Z-axis as the back direction.

The meter panel **100** illustrated in FIG. **4** includes a meter section **10.** The meter section **10** includes a first analog meter **11,** a second analog meter **12,** and a display **13.** The display **13** is disposed between the first analog meter **11** and the second analog meter **12.**

The first analog meter **11** includes a pointer **2A.** The second analog meter **12** includes pointers **2B** and **2C.** The pointer **2A** is rotatably supported about a rotational axis located near the center of the first analog meter **11.** The pointer **2A** indicates, for example, the engine speed according to the direction in which the pointer **2A** points. Here, "engine speed" means the number of engine revolutions per unit time (e.g., per minute). The pointers **2B** and **2C** are each rotatably supported about two different rotation axes located at different positions in the second analog meter **12.** The pointer **2B** indicates, for example, the remaining fuel level based on the direction the tip of the pointer **2B** points. The pointer **2C** indicates, for example, the temperature of the engine cooling water (water temperature) based on the direction the tip of the pointer **2C** points. The pointers **2A, 2B,** and **2C** are driven by respective drive mechanisms (movement) included in the meter section **10.** The drive mechanisms may receive electrical signals indicating sensor outputs such as engine speed, remaining fuel level, and water temperature, and may convert the signals into mechanical motion that changes the orientations of the pointers **2A, 2B,** and **2C.** Each of the drive mechanisms for the pointer **2A, 2B,** and **2C** includes an actuator such as a stepping motor.

The first analog meter **11** further includes a first arc-shaped indicator **40A.** The second analog meter **12** further includes a second arc-shaped indicator **40B.** The first arc-shaped indicator **40A** is arranged around the sweep range of the pointer **2A.** The second arc-shaped indicator **40B** is arranged around the sweep range of the pointers **2B** and **2C.** The term "arc" in the present disclosure means a part of a circle (circumference), but such circle is not limited to a "perfect circle," and may include a portion in which the curvature changes gently or locally, such as a part of an ellipse. The first arc-shaped indicator **40A** and the second arc-shaped indicator **40B** have a symmetrical structure. In the following description, the first arc-shaped indicator **40A** and the second arc-shaped indicator **40B** may be collectively referred to as "arc-shaped indicator **40".**

Each of the arc-shaped indicators **40A, 40B** may include a plurality of light-emitting elements (e.g., LEDs) that emit light of different colors. The plurality of light-emitting elements may include, for example, an LED that emits red light, an LED that emits green light, and an LED that emits blue light. By selectively activating these LEDs, the arc-shaped indicators **40A, 40B** can function to notify the operator of various information through light of various colors. For this reason, the arc-shaped indicators **40A, 40B** may be referred to as "communication rings".

The display **13** is not an analog meter but a digital meter (i.e., a digital display). The display **13** is, for example, an active matrix display such as a liquid crystal display panel or an OLED (Organic Light Emitting Diode) display. In the following description, it is assumed as an example that the display **13** is a liquid crystal display (LCD). The display **13** includes a large number of pixels arranged two-dimensionally in the display area, and visible display is realized by light emitted from the large number of pixels. In the display **13** in the present example embodiment, each pixel includes RGB sub-pixels, enabling color image display. Unlike the analog meters **11, 12,** the display **13** can display numbers, characters, figures, icons, symbols, still images, or moving images of arbitrary sizes at arbitrary positions in the display area. Strictly speaking, numbers, characters, figures, icons, and symbols are also part of the images (still images or moving images) displayed in the display area by the display **13.** The display **13** can also display, for example, an image that apparently resembles all or part of the analog meters **11, 12** having pointers. When the display **13** displays an image of an "analog meter", it is also possible to rotate the "pointer" in the image in any direction as part of a moving image by changing the image on a frame-by-frame basis.

When the work vehicle is an electric vehicle driven by a battery, the display of engine speed, remaining fuel level, and water temperature may be replaced by, for example, display of motor output, remaining battery level, and battery temperature, respectively.

The difference between the "analog meter" image displayed by a digital display such as the display **13** and the first and second analog meters **11** and **12** is that the former is two-dimensional, whereas the latter is three-dimensional. Also, the former can change the shape, color, and size of the pointer and scale markings of the analog meter, while it is difficult to do so with the latter. Furthermore, with the former, since visibility depends on the contrast of the image, there is a possibility that visibility may decrease when ambient light is strong during the day, while with the latter, such a possibility is relatively small. Taking these factors into consideration, in the present example embodiment, some of the information to be displayed on the meter section **10,** particularly information that is highly important and requires high visibility, is displayed by the analog meter having a three-dimensional structure.

The outer shape of the meter section **10** when viewed from the front is a closed curve resembling an ellipse, but the outer shape of the meter section **10** is not limited to such an example. The outer shape of the meter section **10** when viewed from the front may be approximately rectangular, or may be a shape formed by a combination of straight lines and curves.

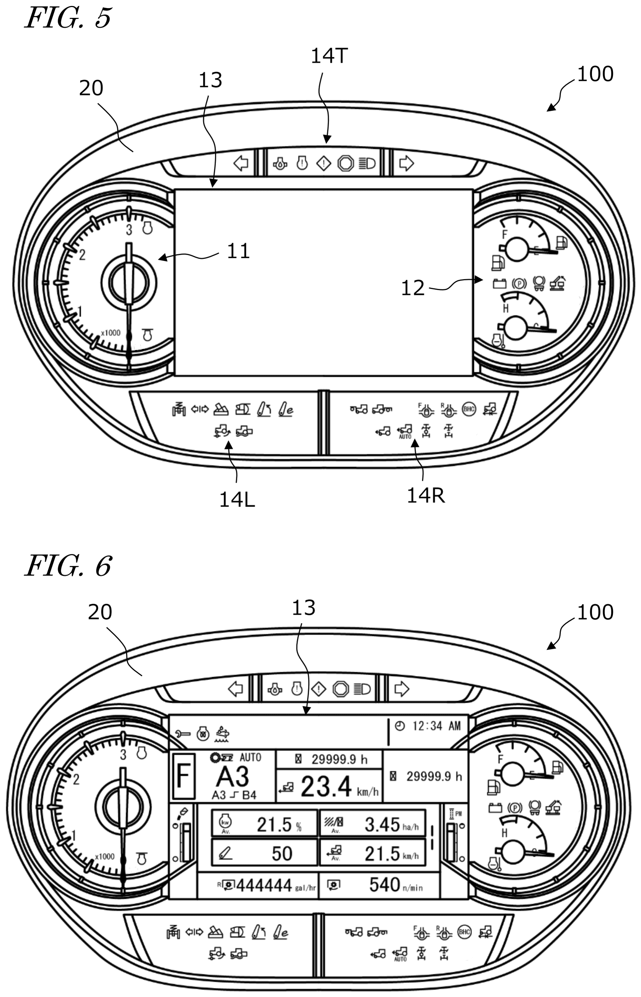

Next, referring to FIG. **5****,** indicator areas of the meter section **10** will be described. In the example of FIG. **5****,** the meter section **10** includes an indicator area **14T** provided above the display **13** and indicator areas **14L, 14R** provided below the display **13.** Various indicators are provided in each of the indicator areas **14T, 14L, 14R.** Each indicator presents predetermined information, such as a warning, when a light-emitting element such as an LED located behind it is illuminated.

In the present example embodiment, two indicator areas **14L, 14R** divided left and right are disposed below the display **13,** but a single indicator area combining the two indicator areas may be disposed.

The indicator area **14T** located above the display **13** is less likely to be obstructed from view by the spokes **222A, 222B, 222C** of the steering wheel **220** compared to the other indicator areas **14L, 14R.** For this reason, it is preferable that indicators indicating particularly important information (information with a high warning level) from among numerous indicators (e.g., indicators indicating the lighting state of the lighting device, turn indication, driver alerts, and the like) be selected and arranged in the indicator area **14T.** The "warning level" of information displayed by an indicator may be defined, for example, in the operator's manual of the work vehicle. For example, information such as engine abnormality or failure, and whether or not the headlights are on, has a high warning level.

In the present example embodiment, each individual indicator arranged in the indicator area includes a light-transmitting area having a shape defining a characteristic figure (including icons and/or characters), and a light-emitting element arranged behind it. An indicator may be turned on or off by turning on or off the light-emitting element behind it. One or two light-emitting elements, for example, are arranged behind each individual indicator.

Next, referring to FIG. **6****,** an example of the display **13** will be described. In the example of FIG. **6****,** the display area of the display **13** is divided into several regions. In each region, Images showing information such as gear position, vehicle speed, various function performance displays, and hour meter are displayed. These images include various types of information represented by characters, numbers, figures, icons, symbols, and the like. Various digital images may each be shown in different colors to improve visibility. When it is particularly necessary to draw the operator's attention, at least one of the position, size, or color of characters, numbers, figures, icons, and symbols may be changed to display them in a highlighted manner. When such emphasized display is performed, sound or voice may be emitted from an acoustic device such as a speaker.

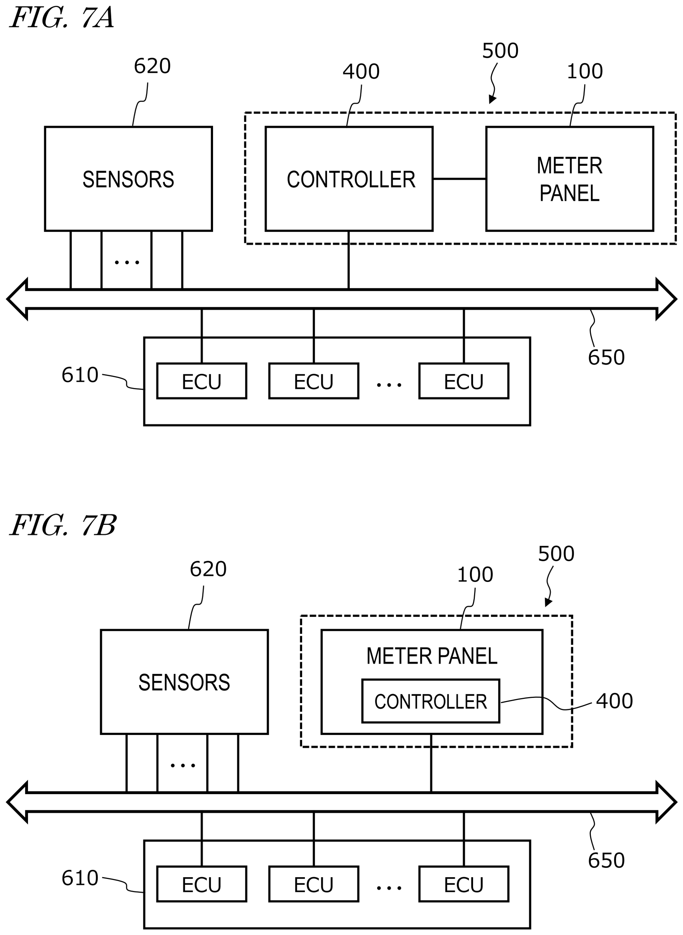

Next, an example of an information display system in the work vehicle **200** will be described. FIG. **7A** is a block diagram schematically illustrating a configuration example of an information display system **500** in an example embodiment of the present disclosure. The information display system **500** illustrated in FIG. **7A** includes the meter panel **100** described above and a controller **400** that controls the meter panel **100.** The controller **400** may include a plurality of electronic control units (ECUs) arranged in the work vehicle. In the example of FIG. **7A****,** the controller **400** is a device independent of the meter panel **100.**

FIG. **7B** illustrates another example of the information display system **500.** In the example of FIG. **7B****,** the controller **400** is provided inside the meter panel **100.** In this case, the meter panel **100** itself may function as the information display system **500.**

The information display system **500** may further include an acoustic device such as a buzzer or a speaker. The information display system **500** may also include another display separate from the meter panel **100.** The controller **400** may be configured or programmed to cause another display, instead of the display of the meter panel **100** (i.e., the display **13),** to present various information related to the state of the work vehicle.

The information display system **500** may be communicatively connected to ECUs **610** and sensors **620** included in the work vehicle via a bus **650.** In the following description, each ECU included in the ECUs **610** of the work vehicle may be referred to as a "vehicle ECU". Each ECU included in the ECUs **610** and the controller **400** can communicate with each other in accordance with a vehicle bus standard such as CAN (Controller Area Network). One ECU that controls the overall operation of the work vehicle may receive signals from other ECUs and sensor data output from a plurality of sensors included in the sensors **620,** and instruct the controller **400** to display a warning message or to turn on, off, or cause blinking of an indicator according to the state of the work vehicle. The controller **400** may be configured or programmed to display a warning message in the display area of the meter panel **100,** or to turn on, turn off, or blink an indicator in response to instructions from that ECU.

In FIGS. **7A** and **7B****,** wiring other than the bus **650** is simplified in illustration. However, there may be, for example, wiring for directly transmitting signals from one or more sensors included in the sensors **620** to the controller **400,** or wiring for connecting input devices described later to the controller **400.** There may also be power supply wiring for supplying power from a battery to each of the meter panel **100,** the controller **400,** the ECUs **610,** and the sensors **620.**

One example of the controller **400** in the present example embodiment is a computing device including at least one processor and at least one memory that stores a computer program (code) defining control processes executed by the processor. Another example of the controller **400** is a computing device including a hardware accelerator such as an FPGA (Field-Programmable Gate Array), ASSP (Application Specific Standard Product), or ASIC (Application-Specific Integrated Circuit) configured or programmed to execute control processes.

The "processor" in the present example embodiment is a hardware electronic circuit such as a CPU (Central Processing Unit), GPU (Graphics Processing Unit), DSP (Digital Signal Processor), ISP (Image Signal Processor), or NPU (Neural Network Processing Unit). The "memory" is a hardware electronic circuit such as ROM (Read Only Memory) or RAM (Random Access Memory). A portion of the memory may be a storage medium connected to the processor by wiring or a network. These hardware electronic circuits may be implemented by one or more integrated circuits (ICs) or large-scale integrated circuits (LSIs). Each functional unit or block in the electronic circuit and associated components may be individually manufactured as separate integrated circuit chips, or some or all of these functional units or blocks may be combined and manufactured as a single integrated circuit chip.

A program defining operations of a processor may be designed so that the processor executes one or more functions, operations, steps, or processes in the present example embodiment of the present invention.

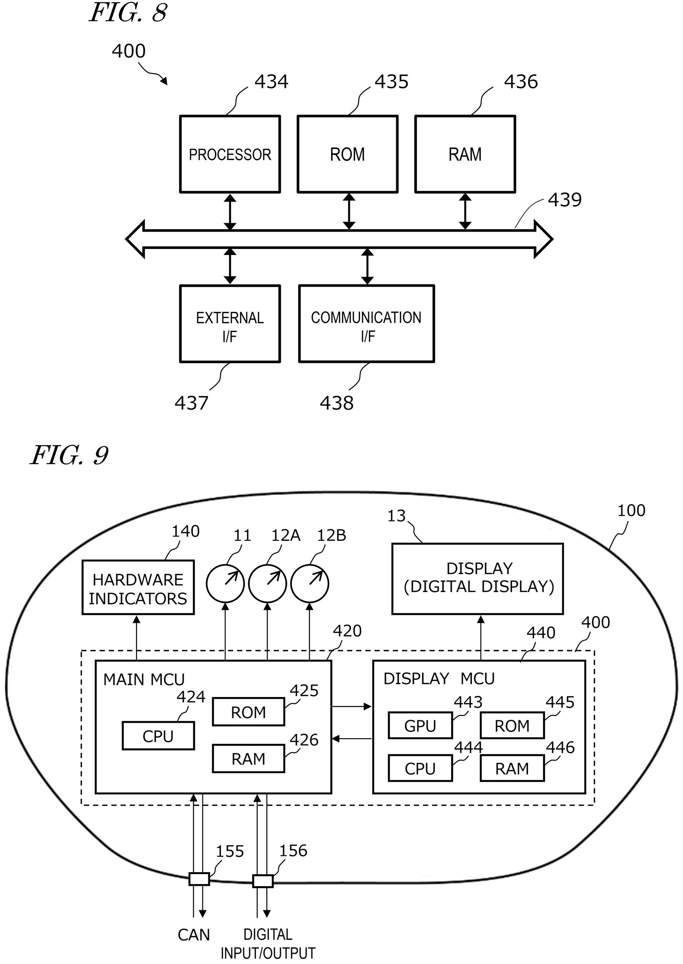

FIG. **8** is a block diagram illustrating an example of the hardware configuration of the controller **400.** The controller **400** may include a processor **434,** a ROM **435,** a RAM **436,** an external interface (I/F) **437,** and a communication I/F **438.** These components are interconnected via a bus **439.**

The ROM **435** may be, for example, a programmable memory (e.g., PROM), a rewritable memory (e.g., flash memory), or a read-only memory. The ROM **435** stores a program for controlling the operation of the processor. The ROM **435** need not be a single storage medium, but may be a collection of a plurality of storage media. Some of the plurality may be removable memory.

The RAM **436** provides a working area for temporarily loading a program stored in the ROM **435** during boot. The RAM **436** need not be a single storage medium, but may be a collection of a plurality of storage media.

The external I/F **437** is an interface for connecting the controller **400** to external devices. The external I/F **437** may include, for example, a USB (Universal Serial Bus) interface and a digital or analog video interface.

The communication I/F **438** is an interface for communication between the controller **400** and other electronic components or ECUs. The communication I/F **438** can perform wired communication in accordance with various protocols such as CAN or Ethernet (registered trademark). The communication I/F **438** may also perform wireless communication in accordance with the Bluetooth (registered trademark) standard and/or the Wi-Fi (registered trademark) standard. Such wireless communication may be performed using frequency bands such as the 2.4 GHz band, 5 GHz band, or 60 GHz band.

The controller **400** may further include a storage device other than the ROM **435** and RAM **436.** Such a storage device may be, for example, a semiconductor storage device, a magnetic storage device, or an optical storage device, or a combination thereof.

The ECUs **610** of the work vehicle may include, for example, an ECU for engine control, an ECU for transmission control, an ECU for steering control, an ECU for light control, and an ECU for implement control. When the work vehicle is configured or programmed to travel autonomously, the ECUs **610** may further include an ECU for autonomous driving control. The ECU for autonomous driving control performs computation and control for realizing autonomous driving based on sensor data output from various sensors mounted on the vehicle body.

The sensors **620** may include, for example, a temperature sensor, an illuminance sensor, a fuel sensor, a water temperature sensor, an oil level sensor, an engine rotation sensor, a vehicle speed sensor, a battery voltage sensor, a shuttle level sensor, a hand accelerator sensor, an accelerator pedal sensor, a main gear shift lever sensor, a range gear shift lever sensor, a seat belt sensor, a Particulate Matter (PM) sensor, an acceleration sensor, an angular velocity sensor, an IMU (Inertial Measurement Unit), a geomagnetic sensor, an imaging device, a LiDAR sensor, an ultrasonic sensor, an obstacle contact sensor, and a GNSS receiver.

In the example of FIG. **7A****,** the controller **400** may be an external integrated circuit device externally attached to the meter panel **100.** Alternatively, in the example of FIG. **7B****,** the controller **400** may be an integrated circuit device mounted on a board inside the meter panel **100.**

Some or all of the functions of the controller **400** may be realized by one or more vehicle ECUs. Alternatively, some or all of the functions of the controller **400** may be realized by one or more server computers (hereinafter referred to as "servers") connected to the meter panel **100** via a communication network. In this way, one or more vehicle ECUs and/or one or more servers may cooperate with the controller **400** to implement various functions of the information display system **500.** In that case, the vehicle ECU and/or server may function as a portion of the information display system **500.**

FIG. **9** is a block diagram illustrating an example in which the controller **400** is implemented inside the meter panel **100.** In this example, the controller **400** includes two microcontroller units (MCUs). The two MCUs are a main MCU **420** and a display MCU **440.** The main MCU **420** controls the overall operation of the meter panel **100.** The display MCU **440** controls rendering on the display **13** (e.g., an LCD), which is a digital display.

The main MCU **420** includes, for example, a CPU **424,** ROM **425,** and RAM **426.** The main MCU **420** controls hardware indicators **140,** the first analog meter **11,** the second analog meter **12** (two analog meters **12A, 12B** in the present example embodiment), and the display MCU **440.** The hardware indicators **140** includes the arc-shaped indicators **40A, 40B,** and a plurality of light-emitting elements such as LEDs behind the indicator areas **14T, 14L, 14R** illustrated in FIG. **5****.** The ROM **425** is a non-volatile memory that stores software (program and various data used in processing) executed by the CPU **424.** The main MCU **420** controls the overall operation of the meter panel **100** by the CPU **424** executing the software.

The display MCU **440** includes, for example, a CPU **444,** GPU **443,** ROM **445,** and RAM **446.** The ROM **445** is a non-volatile memory that stores software executed by the CPU **444** and GPU **443.** The display MCU **440** controls drawing to the display **13** by the CPU **444** and GPU **443** executing the software.

The meter panel **100** may include a communication interface **155** for communicating with one or more vehicle ECUs connected to the meter panel **100** via an in-vehicle network such as CAN. The meter panel **100** may also include an external interface **156** that enables digital signal input and output between the meter panel **100** and devices directly connected thereto. Signals input from these interfaces **155** and **156** are sent to the main MCU **420.**

In the example illustrated in FIG. **9****,** the display MCU **440** specialized for image processing is provided separately from the main MCU **420.** This is to realize relatively computationally intensive rendering, such as color camera images and 3D display, on the display **13,** which is a relatively large (e.g., 10 inches or more) and high-resolution LCD or the like. Unlike the present example embodiment, if the display **13** is small or a monochrome LCD and does not require such advanced image processing, the display MCU **440** may not be provided, and a single MCU (e.g., the main MCU **420)** may perform all controls including drawing.

In the information display system **500** in the present example embodiment, the controller **400** may be configured or programmed to display information by the arc-shaped indicator **40** before displaying various information on the display **13** when the work vehicle is started. This allows the system to provide, first, information that the operator should know at startup. The information conveyed by the arc-shaped indicator **40** may include, for example, information indicating whether the state of the work vehicle is normal or not. The controller **400** may be configured or programmed to change the color of light emitted from the arc-shaped indicator **40** according to the information to be conveyed to the user. For example, when there is no abnormality at startup, the controller **400** may operate to emit light of a first color (e.g., blue) from the arc-shaped indicator **40,** and when there is a problem that may affect travel, emit light of a second color (e.g., red) indicating an abnormality immediately after startup. Examples of cases where problems affecting travel may occur include battery voltage abnormality, engine oil pressure abnormality, engine overheating, and brake system abnormality. The emitted light color is not limited to blue and red, and may be other colors such as green.

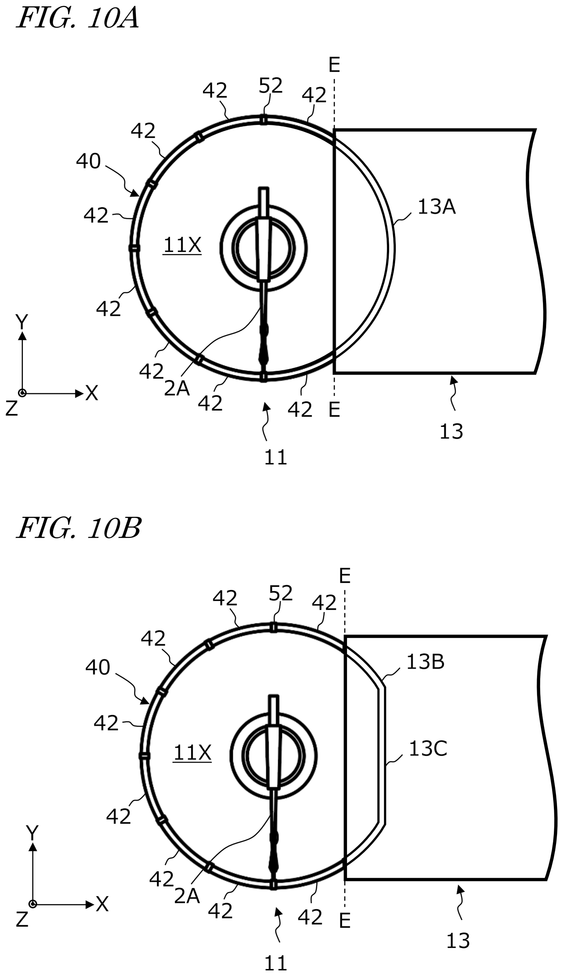

The controller **400** may be configured or programmed to cause the display **13** to display a curved image extending the arc. FIG. **10A** is a front view schematically illustrating an example in which an arc **13A** of the same color as the light emitted from the light-emitting area **42** of the arc-shaped indicator **40** is displayed. FIG. **10A** shows, as an example, an arc **13A** concentric with the arc of the arc-shaped indicator **40.** FIG. **10B** is a front view schematically illustrating an example in which an arc **13B** of the same color as the light emitted from the light-emitting area **42** of the arc-shaped indicator **40,** and another graphic element **13C** including an arc of the same color are displayed. The other graphic element **13C** in the example illustrated in FIG. **10B** includes a straight-line portion. In this example, the controller **400** causes the display **13** to display an arc **13B** concentric with the arc of the light-emitting area **42,** and a straight-line portion connected to the arc **13B.** The straight-line portion extends parallel to the straight line defining the boundary between the first analog meter **11** and the display **13** (corresponding to the E-E dashed line shown in FIG. **10B****).** By performing such display, the portion of the circle surrounding the first analog meter **11** that is cut off by the E-E dashed line is visually perceived by the operator as part of the first analog meter **11,** making it possible to perceive the first analog meter **11** as larger. Also, the image displayed as if it were part of the first analog meter **11** (hereinafter referred to as a "ring complement image") may be partially hidden by information such as numbers or characters displayed on the display **13.** The arc **13B** portion may include a straight-line shape, similar to the graphic element **13C.** By including a straight-line shape in the portion displayed on the display **13,** a sharp design can be achieved.

The controller **400** can cause the display **13** to display various images in accordance with the light emitted from the light-emitting area **42** of the arc-shaped indicator **40,** not limited to the examples of FIGS. **10A** and **10B****.** The controller **400** can also cause the display **13** to display various images in synchronization with the blinking of the light-emitting area **42** of the arc-shaped indicator **40.** By emphasizing or coordinating the display of the arc-shaped indicator **40** and the display of the display **13** in this manner, the display of the arc-shaped indicator **40** becomes easier for the operator to perceive.

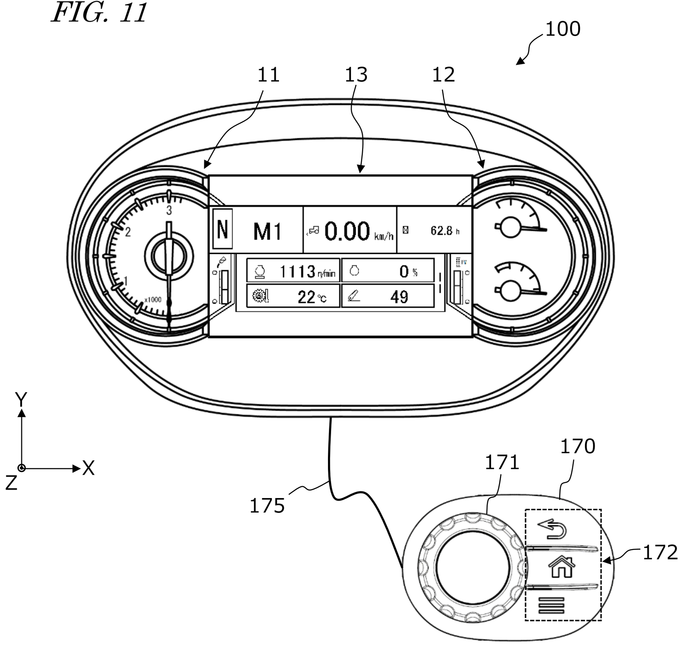

After startup of the meter panel **100,** a home screen may be displayed in the display area of the display **13.** FIG. **11** is a diagram illustrating an example of the home screen. Starting from the home screen, a user can use an input device to perform actions such as changing the display of content in the display area or selecting various setting items.

In the example illustrated in FIG. **11****,** an input device **170** that enables interactive operations by the user is connected to the meter panel **100** via a communication cable **175.** The input device **170** includes, for example, a selector switch **171** such as a jog dial, and an operation switch **172.** The input device **170** may be connected to the meter panel **100** by wire or wirelessly. Any device that accepts user operations can be used as the input device **170.** The input device **170** may include, for example, a rotary switch, a slide switch, a push button switch, a touch-screen, a joystick, or a combination of two or more of these.

The display **13** includes a display area in which various images representing information related to the work vehicle are displayed. Information related to the work vehicle may include, for example, information related to the engine, PTO shaft, hydraulic/three-point hitch, vehicle travel direction, clutch, transmission, brakes, and various electrical components in the vehicle. This information indicates, for example, the internal state of the work vehicle. Furthermore, various contents such as camera images, radio setting screens, and audio setting screens may be displayed in the display area of the display **13.**

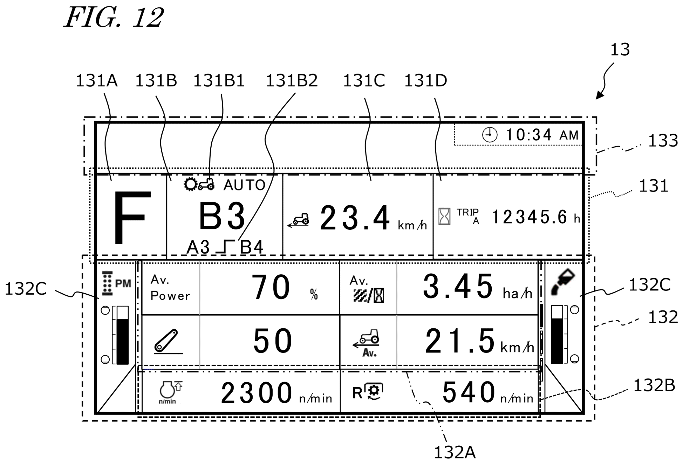

Next, with reference to FIG. **12****,** the segmentation of the display area will be described. FIG. **12** is a diagram schematically illustrating an example of the segmentation of the display area. The display area of the display **13** is divided into a plurality of blocks. In other words, the display area of the display **13** includes a plurality of regions. The plurality of regions in the example illustrated in FIG. **12** include a primary area **131,** a sub-area **132,** and an LCD indicator area **133.** The primary area **131** in FIG. **12** is the area surrounded by a dotted line in the display area of the display **13.** The sub-area **132** is the area surrounded by a dashed line in the display area of the display **13.** The LCD indicator area **133** is the area surrounded by a dash-dot line in the display area of the display **13.** These three areas do not overlap each other. Note that the dashed line, dotted line, and dash-dot line in FIG. **12** are shown partially overlapping for ease of understanding.

The primary area **131** is an area for displaying images in the foreground (i.e., the frontmost layer). The primary area **131** in the example illustrated in FIG. **12** is a rectangular area (or panel-like area). However, the outer shape of the primary area **131** may be, for example, an ellipse or a figure that is a combination of straight lines and curves. The primary area **131** displays a primary image showing particularly important information (hereinafter referred to as "primary information") among information related to the work vehicle. The primary information is information that the user should know on a priority basis, and includes, for example, information indicating the travel direction (forward, neutral, reverse, etc.), transmission state, and vehicle speed (hereinafter referred to as "vehicle speed") of the work vehicle.

In this manner, the primary image containing primary information is displayed in the primary area **131** at the foreground of the display area. As illustrated in FIG. **11****,** the primary image is displayed in front of the ring complement image. This allows the primary image to appropriately convey primary information to the user without being obscured by other images or content. Accordingly, the visibility of primary information, which is particularly important among various types of displayed information, is improved, and overlooking of primary information is reduced.

In the example illustrated in FIG. **12****,** the primary area **131** has a horizontally extending band-like shape. The primary area **131** displays a plurality of types of information related to the traveling state of the work vehicle. The primary area **131** is divided into a plurality of regions. In the example of FIG. **12****,** the primary area **131** is divided into a first region **131A,** a second region **131B,** a third region **131C,** and a fourth region **131D** arranged in the horizontal direction.

The first region **131A** located at the left end displays the state of the shuttle lever of the work vehicle, i.e., the travel direction. The first region **131A** displays, for example, information indicating whether the shuttle lever is in the forward (F), neutral (N), or reverse (R) position.

The second region **131B** located second from the left displays information related to the transmission state, e.g., settings of the gear stage of the work vehicle.

In the example of FIG. **12****,** the second region **131B** displays the current main gear and range gear positions represented by the symbol "B3". "B" indicates the range gear stage, and "3" indicates the main gear stage. The second region **131B** may also display an icon **131B1** indicating that the vehicle is in automatic shift mode, and a gear range **131B2** in automatic shift mode, as shown in FIG. **12****.**

The third region **131C** displays vehicle speed information. The controller **400** may be configured or programmed to switch the vehicle speed information display between kilometers and miles, for example, in accordance with an instruction from a vehicle ECU.

The fourth region **131D** at the right end displays information other than travel direction, transmission state, and vehicle speed. In the example of FIG. **12****,** the fourth region **131D** displays the hour meter reading, i.e., the total operating hours of the work vehicle to date. The fourth region **131D** may also display information other than the hour meter reading. For example, various types of information such as the engine speed upper limit setting value or the engine speed target value recorded in memory may be displayed in the fourth region **131D.** The controller **400** may be configured or programmed to dynamically change the display in the fourth region **131D,** for example, in accordance with instructions from a vehicle ECU. The fourth region **131D,** together with the region **132B** described later, dynamically displays the traveling and working performance of the work vehicle. For this reason, the fourth region **131D** may be referred to as a "dynamic performance monitor area".

The sub-area **132** is located below the primary area **131.** Various contents are displayed in the sub-area **132.** The sub-area **132** in the example illustrated in FIG. **12** is a rectangular area and is further divided into three types of regions. The sub-area **132** includes a performance monitor area **132A,** a dynamic performance monitor area **132B,** and two gauge areas **132C.**

The performance monitor area **132A** is the largest area among the three areas included in the sub-area **132,** and is positioned toward the upper side in the sub-area **132.** The performance monitor area **132A** mainly displays one or more items (hereinafter referred to as "selected items") selected by the user from among various items indicating various function performance information. Examples of items that the user can select include engine speed, engine speed upper limit setting value, engine speed memory value, fuel consumption, fuel efficiency, travel distance, load factor, PTO shaft speed, slip ratio, diesel particulate filter (DPF) regeneration, and information related to working area.

The screen of selected items may consist of a plurality of pages that can be paged forward or backward by the user operating the input device. FIG. **12** shows an example of a plurality of selected items displayed on one page among a plurality of pages. In the example illustrated in FIG. **12****,** four selected items are displayed on one page. However, the number of selected items displayed on one page is not limited to four, and may be, for example, two, three, or five or more.

The dynamic performance monitor area **132B** is positioned toward the lower side in the sub-area **132.** Various items indicating the various function performance information described above may be displayed in the dynamic performance monitor area **132B.** The display of information displayed in the dynamic performance monitor area **132B** may be controlled by the controller **400** that has received an instruction from, for example, a vehicle ECU. The controller **400** may be configured or programmed to change the display in the dynamic performance monitor area **132B** in response to an instruction from the vehicle ECU. As illustrated in FIG. **12****,** for example, two items may be displayed in the dynamic performance monitor area **132B.** However, the number of items is not limited to two. The dynamic performance monitor area **132B** may also display nothing, as illustrated in FIG. **11****.**

The gauge areas **132C** are located on the right and left sides of the sub-area **132.** The performance monitor area **132A** and the dynamic performance monitor area **132B** are located between the left and right gauge areas **132C.** Gauge images including icons and scales may be displayed in each of the right and left gauge areas **132C.** Examples of gauge images include information related to the remaining amount of diesel exhaust fluid (DEF), the amount of particulate matter (PM) accumulation, and the tire pressure.

The images displayed in the performance monitor area **132A** and the dynamic performance monitor area **132B** may be changed in accordance with user operations using the input device **170.** For example, camera images, screens for radio or audio settings, front loader control, cylinder flow control, operation unit settings, steering assist control, automatic steering control, or attachment or implement control, as well as a launcher screen displaying a list of functional items, may be displayed across the entire performance monitor area **132A** and dynamic performance monitor area **132B.** By integrating two or more areas into one area for use in this manner, images or content can be displayed relatively large.

The LCD indicator area **133** is located above the primary area **131.** The LCD indicator area **133** in the example illustrated in FIG. **12** is a rectangular area, similar to the primary area **131** and the sub-area **132.** The LCD indicator area **133** functions as an area for displaying information indicating the state of the work vehicle, warning information, maintenance-related information, and the like. For example, an indicator that lights up when a warning such as a brake warning or fuel level warning should be issued, and turns off when the condition is resolved, may be displayed in the LCD indicator area **133.** As another example, an indicator that lights up periodically to prompt the user to perform maintenance such as DPF regeneration or engine oil change may be displayed in the LCD indicator area **133.** As a further example, an indicator for requesting an increase or decrease in engine speed may be displayed in the LCD indicator area **133.** In the LCD indicator area **133,** no indicators are displayed in the normal state, and a black background may be displayed. When a condition requiring display of a warning or maintenance information arises, the indicator corresponding to that warning or maintenance information lights up. The LCD indicator area **133** may display a maximum of, for example, approximately 10 indicators. Since indicators can be prominently displayed against a black background, it is possible to make it easy for the operator or user to notice the occurrence of LCD indicators.

The LCD indicator area **133** is located below the indicator area **14T** illustrated in FIG. **5****.** The indicators arranged in the indicator area **14T** are hardware indicators that light up by means of light-emitting elements such as LEDs. In contrast, the indicators displayed in the LCD indicator area **133** are lit by rendering on the LCD. In the present specification, a hardware indicator using an LED may be referred to as an "LED indicator", and an indicator displayed in the LCD indicator area **133** may be referred to as an "LCD indicator", to distinguish between the two.

The sub-area **132** illustrated in FIG. **12** may also display an image (hereinafter sometimes referred to as a "pop-up image") containing a message for notifying the user of the content of an abnormality or failure, or a message for warning of the internal state of the vehicle system, for example, when an abnormality or failure of the engine or electrical components is detected. The sub-area **132** may also display a pop-up image containing a message showing maintenance information.

Next, an example of the display operation related to DPF regeneration of the work vehicle will be described.

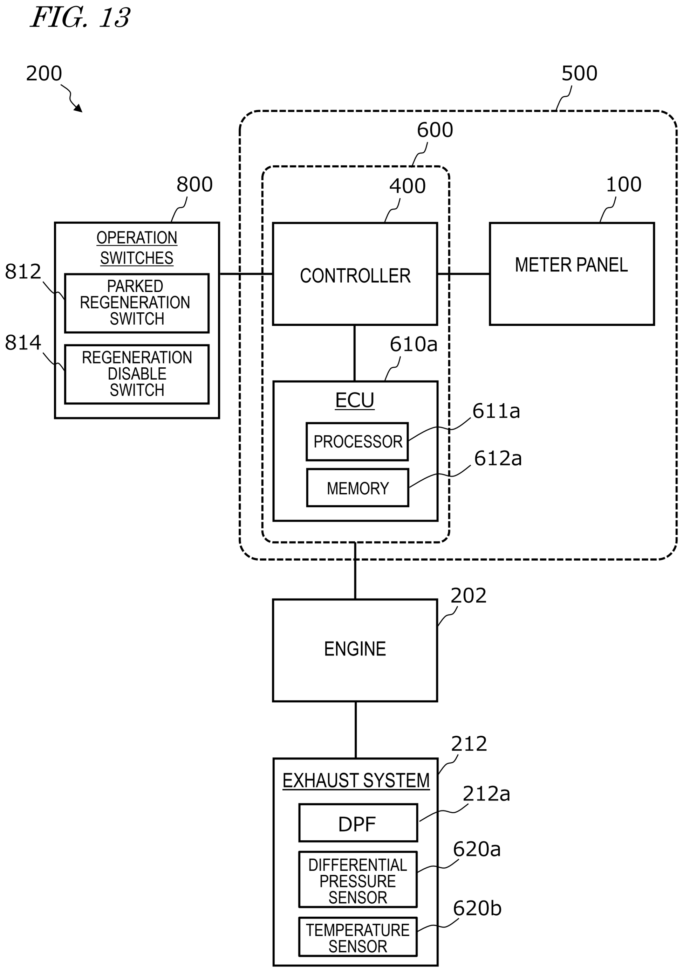

FIG. **13** is a block diagram illustrating an example of the components of the work vehicle **200** related to DPF regeneration. As described above, the prime mover (engine) **202** of the work vehicle **200** is, for example, a diesel engine. The work vehicle **200** includes an exhaust system **212** that discharges exhaust gas from the diesel engine **202** to the outside. The exhaust system **212** is provided with a diesel particulate filter (DPF) **212a** that traps particulate matter (PM) in the exhaust gas. When the amount of particulate matter accumulated in the DPF **212a** reaches or exceeds a predetermined threshold, "DPF regeneration" is performed to reduce the particulate matter in the DPF **212a** and restore the filtering capability of the DPF **212a.** For example, by raising the temperature of the exhaust gas of the engine **202** or mixing fuel into the exhaust gas, the particulate matter in the DPF **212a** can be combusted and reduced. DPFs and regeneration techniques are well known, and therefore will not be described in detail here.

Types of DPF regeneration include "parked DPF regeneration" performed while the work vehicle **200** is parked, and "automatic DPF regeneration" performed automatically while the work vehicle **200** is in operation (e.g., while traveling). Hereinafter, parked DPF regeneration is simply referred to as "parked regeneration" and automatic DPF regeneration is simply referred to as "automatic regeneration". The term "parked" in the present example embodiment also includes a state in which the work vehicle **200** is stopped with a person on board. During DPF regeneration, the engine **202** is in operation. The display operation of the present example embodiment is applicable to both parked regeneration and automatic regeneration.

As illustrated in FIG. **13****,** the work vehicle **200** includes an information display system **500.** The information display system **500** illustrated in FIG. **13** includes the meter panel **100** and a controller **600.** The meter panel **100** includes a display **13** (i.e., a digital display) as described above. The controller **600** includes a controller **400** and an ECU **610a.** The ECU **610a** is one of the ECUs included in the ECUs **610** (see FIGS. **7A**, **7B**). Note that the operations described later executed by the ECU **610a** may be implemented by a combination of two or more ECUs included in the ECUs **610.**

The ECU **610a** includes a processor **611a** and a memory **612a.** The memory **612a** includes ROM and RAM. The operation of the ECU **610a** can be realized by the processor **611a** executing a computer program stored in the memory **612a.**

The exhaust system **212** includes a differential pressure sensor **620a** and a temperature sensor **620b.** The differential pressure sensor **620a** and temperature sensor **620b** are included in the sensors **620** illustrated in FIGS. **7A, 7B****.** The differential pressure sensor **620a** is a sensor for detecting the amount of accumulated particulate matter in the DPF **212a.** The differential pressure sensor **620a** detects the differential pressure between the inlet and outlet of the DPF **212a.** As the amount of particulate matter accumulated in the DPF **212a** increases, the differential pressure increases, and as the amount of particulate matter decreases, the differential pressure decreases. By detecting the differential pressure, the amount of accumulated particulate matter can be detected. The temperature sensor **620b** is a sensor that measures the temperature of the DPF **212a.** The temperature sensor **620b** is arranged to measure the temperature of the inlet, outlet, or diesel oxidation catalyst (DOC) of the DPF **212a.** In the present specification, the temperature of the inlet, outlet, or DOC is referred to as the "temperature of the DPF **212a".** The DOC is provided between the inlet and the DPF **212a** and promotes combustion (i.e., oxidation) of particulate matter in the exhaust gas.

The differential pressure sensor **620a** outputs to the ECU **610a** a signal corresponding to the detected differential pressure. The temperature sensor **620b** outputs to the ECU **610a** a signal indicating the measured temperature. The processor **611a** of the ECU **610a** may be configured or programmed to determine, based on the output signal of the differential pressure sensor **620a,** whether the amount of accumulated particulate matter (PM) in the DPF **212a** has reached or exceeded a predetermined threshold. When the amount of accumulated PM in the DPF **212a** is at or above the predetermined threshold, the processor **611a** determines that DPF regeneration is necessary. The processor **611a** further determines, based on the output signal of the temperature sensor **620b,** whether the temperature of the DPF **212a** is at or above a predetermined value. The processor **611a** may be configured or programmed to start DPF regeneration automatically or in response to user operation (i.e., manually) when a predetermined condition is satisfied, including that the amount of accumulated PM in the DPF **212a** is at or above the predetermined threshold and the temperature of the DPF **212a** is at or above the predetermined value.

In the example illustrated in FIG. **13****,** the operation switches **800** of the work vehicle **200** include a parked regeneration switch **812** and a regeneration disable switch **814.** The parked regeneration switch **812** is a switch operated by the user to manually start DPF regeneration (i.e., parked regeneration) while the work vehicle **200** is parked. The regeneration disable switch **814** is a switch operated by the user to prohibit DPF regeneration. The parked regeneration switch **812** and regeneration disable switch **814** may be provided at any location in the work vehicle **200.**

Automatic regeneration is performed when the automatic regeneration mode is on. The automatic regeneration mode is turned on by default, for example. The user can switch the automatic regeneration mode between on and off by operating the regeneration disable switch **814.** Since high-temperature exhaust gas is discharged during DPF regeneration, the automatic regeneration mode may be turned off in places where such exhaust is undesirable (e.g., greenhouses or livestock barns).

The controller **600** can cause the display **13** of the meter panel **100** to display information related to DPF regeneration. Control of the display of the display **13** is performed via the controller **400.** The controller **400** performs data communication with the ECU **610a** and causes the display **13** to display various information based on data acquired from the ECU **610a.** Control of the display of the display **13** executed by the processor **611a** of the ECU **610a** described below may be realized through cooperation of the ECU **610a** and the controller **400.**

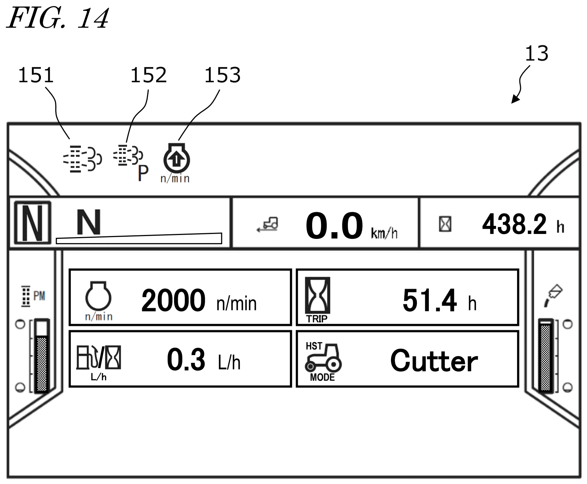

FIG. **14** is a diagram illustrating an example of information related to DPF regeneration displayed on the display **13.** In the indicator area at the top of the screen of the display **13,** various information related to DPF regeneration may be displayed. Such information may include, for example, icons **151, 152, 153** illustrated in FIG. **14****.** The controller **600** can convey information related to DPF regeneration to the user by changing the state of these icons **151, 152, 153.**

Icon **151** is an indicator showing whether DPF regeneration is necessary and the state of DPF regeneration. When the amount of PM accumulated in the DPF **212a** exceeds a first threshold, the icon **151** blinks. When the conditions necessary for automatic regeneration are met in that state, DPF regeneration is automatically started. When DPF regeneration is started, the icon **151** changes from blinking to steadily lit. When DPF regeneration is completed, the icon **151** turns off.

Icon **152** is an indicator showing whether parked regeneration is necessary and the state of parked regeneration. When the amount of PM accumulated in the DPF **212a** exceeds a second threshold that is greater than the first threshold, the icon **152** that prompts the user to perform parked regeneration blinks. This allows the user to recognize that parked regeneration is necessary. When the user stops the work vehicle **200** and performs predetermined operations (e.g., applying the parking brake, moving the shuttle lever to the neutral position, turning off the PTO switch, etc.), and then presses the parked regeneration switch **812,** the icon **152** changes from blinking to steadily lit, and parked regeneration starts. When parked regeneration starts, the icon **152** turns off, and the icon **151** changes from blinking to steadily lit. When parked regeneration is completed, the icon **151** turns off.

Icon **153** is an indicator that prompts the user to increase the engine speed. For automatic regeneration to start, conditions must be met such as the engine being sufficiently warmed up and the engine speed being sufficiently high. When the engine speed is low, the icon **153** blinks. When the user increases the engine speed after seeing this and the speed becomes sufficiently high, the icon **153** turns off.

The controller **600** can convey various information related to DPF regeneration to the user not only through these icons **151, 152, 153** but also by displaying, for example, text messages on the display **13.** For example, a text message for notifying the user of the start, interruption, or completion of DPF regeneration may be displayed on the display **13.**

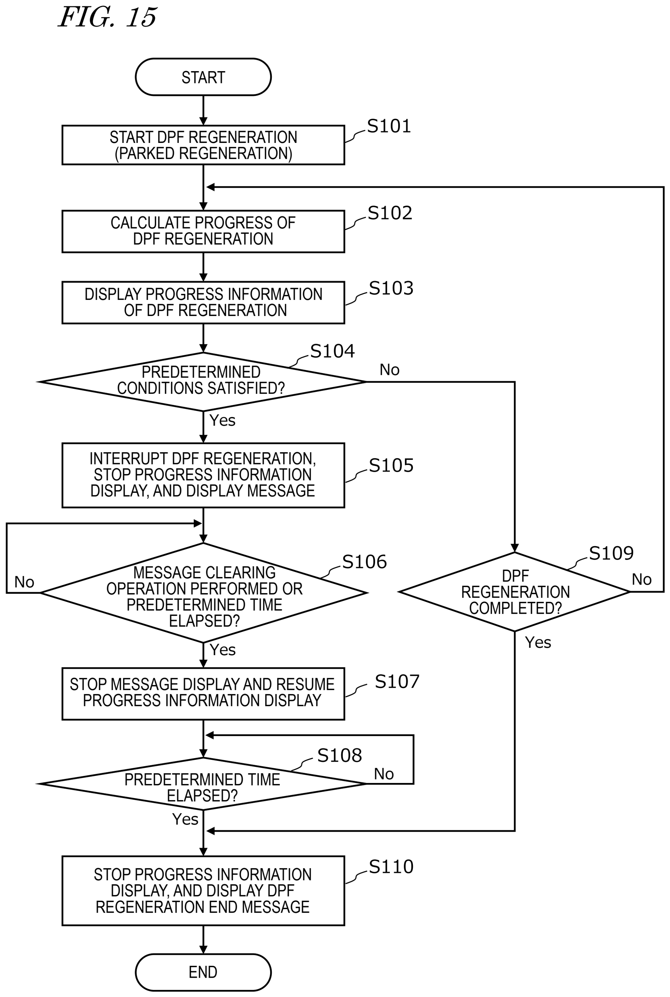

FIG. **15** is a flowchart illustrating an example of operations related to DPF regeneration. Here, an example will be described in which parked regeneration is performed in which the user manually starts DPF regeneration.

When the amount of PM accumulated in the DPF **212a** reaches or exceeds a certain amount and parked regeneration becomes necessary, the controller **400** of the controller **600** causes the icon **152** illustrated in FIG. **14** to blink. After seeing this, the user stops the work vehicle **200** and prepares for parked regeneration by performing, for example, the following operations:
· Apply the parking brake
· Move the shuttle lever to the neutral position
· Set the engine to idle operation
· Turn off the PTO switch
· If the regeneration disable switch **814** is on, turn it off

Thereafter, when the user turns on the parked regeneration switch **812,** DPF regeneration is started. When the parked regeneration switch **812** is a push-button switch, the user can send an instruction to start DPF regeneration (parked regeneration) to the ECU **610a** by pressing the parked regeneration switch **812.**

Upon receiving an instruction from the user to start DPF regeneration, the processor **611a** of the ECU **610a** controls the work vehicle **200** to execute DPF regeneration (Step **S101).** The processor **611a** burns the particulate matter in the DPF **212a** by, for example, performing control to increase the engine speed and raise the temperature of the exhaust gas of the engine **202,** or performing control to mix fuel into the exhaust gas. This makes it possible to reduce the particulate matter.

When DPF regeneration is started, the processor **611a** causes the display **13** to display information indicating that DPF regeneration has started. Control of the display of the display **13** by the processor **611a** is performed via the controller **400.**

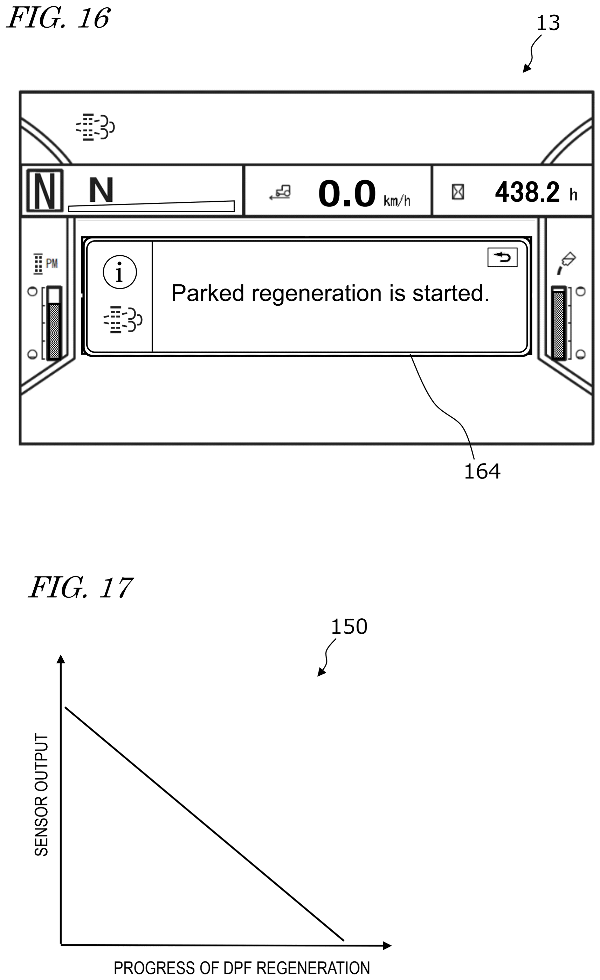

FIG. **16** illustrates an example display of information indicating that DPF regeneration has started. In the example illustrated in FIG. **16****,** a text message **164** is displayed on the display **13** as information indicating that DPF regeneration has started. The user can easily recognize that DPF regeneration has started by viewing the message **164** displayed on the display **13.** This message **164** is cleared from the screen when a predetermined time (e.g., 5 seconds, 10 seconds, 15 seconds, etc.) has elapsed since it was displayed, or when the user performs a deletion operation using the input device **170.**

During DPF regeneration, the processor **611a** calculates the degree of progress of DPF regeneration based on the output signal of the sensor **620a** (Step **S102).** For example, in the memory **612a,** information representing a table or function indicating the relationship between the output value of the sensor **620a** and the progress of DPF regeneration may be stored in advance. FIG. **17** is a diagram illustrating an example of information **150** of a table or function. When the progress of DPF regeneration is low, i.e., when the amount of particulate matter accumulated in the DPF **212a** is large, the differential pressure detected by the sensor **620a** increases. As DPF regeneration proceeds and the amount of particulate matter accumulated in the DPF **212a** decreases, the differential pressure detected by the sensor **620a** gradually decreases.

The processor **611a** can calculate the progress of DPF regeneration based on the output value of the sensor **620a** and the information **150.** The processor **611a** causes the display **13** to display progress information indicating the calculated progress of DPF regeneration (Step **S103).** Control of the display of the display **13** by the processor **611a** is performed via the controller **400.**

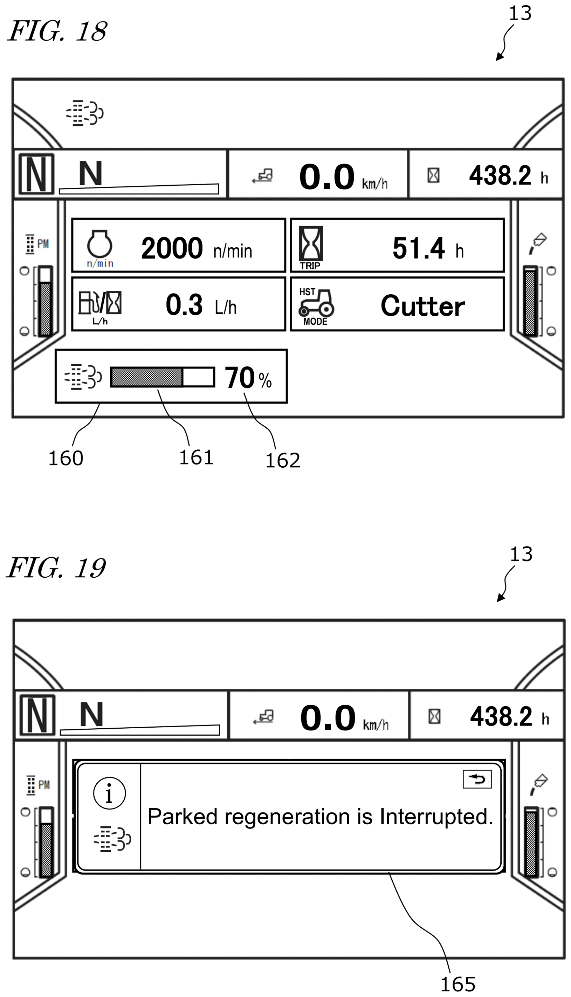

FIG. **18** is a diagram illustrating a display example of progress information **160** indicating the progress of DPF regeneration. When the display of the message **164** in the display screen illustrated in FIG. **16** ends, the display as illustrated in FIG. **18** is presented.

In the example illustrated in FIG. **18****,** the progress information **160** indicates the progress of DPF regeneration as a percentage. The progress information **160** displayed by the display **13** includes a gauge (bar graph) **161** indicating the progress of DPF regeneration, and a numerical value **162** (text) indicating the progress as a percentage. The display of the gauge **161** and numerical value **162** increases from 0% toward 100% according to the progress of DPF regeneration. The user can confirm the progress of DPF regeneration by viewing the progress information **160** displayed on the display **13.** By displaying not only the numerical value **162** indicating the progress but also the gauge **161** indicating the progress, the progress of DPF regeneration can be conveyed to the user in a more easily understandable manner. Such display of progress information **160** may be applied not only to parked regeneration but also to automatic regeneration.

During DPF regeneration, the work operation may be changed or the work may be interrupted. In order to improve user convenience, it is desirable for the user to be able to easily predict when DPF regeneration will end. According to the present example embodiment, the controller **600** calculates the progress of DPF regeneration and causes the display **13** to display the progress information **160** indicating the progress. The user can easily predict the time remaining until DPF regeneration ends by viewing the progress information **160,** making it easier to plan work.

The processor **611a** of the ECU **610a** determines, while the progress information **160** is being displayed, whether predetermined conditions for stopping the display of the progress information **160** and displaying a message are satisfied (Step **S104).** The predetermined conditions may include, for example, conditions for interrupting DPF regeneration (parked regeneration in this example). Examples of conditions for interrupting parked regeneration include the following:
· The parked regeneration switch **812** is pressed during regeneration
· An error occurs in the ECU **610a** (e.g., sensor failure or communication error)
· The accelerator pedal or hand accelerator is moved to a position other than idle
· The parking brake is released
· An operation to rotate the PTO is performed
· The regeneration disable switch **814** is pressed
· The sensors **620a** and **620b** show abnormal values

The processor **611a** can detect these states based on output signals from various sensors in the work vehicle **200** and determine whether to interrupt DPF regeneration.

When the predetermined conditions are satisfied, the processor **611a** interrupts DPF regeneration, stops displaying the progress information **160,** and causes the display **13** to display a message related to DPF regeneration (Step **S105).**

When the predetermined conditions are not satisfied, the processor **611a** determines whether to end DPF regeneration (Step **S109).** The processor **611a** ends DPF regeneration when the output value of the sensor **620a** falls below a predetermined value, and proceeds to Step **S110.** When DPF regeneration is to be continued, the process returns to Step **S102.**

FIG. **19** is a diagram illustrating an example of a message **165** related to DPF regeneration displayed on the display **13** in Step **S105.** In this example, when conditions for interrupting regeneration are satisfied during parked regeneration, the processor **611a** temporarily stops DPF regeneration and causes the display **13** to display a message **165** indicating that DPF regeneration has been interrupted. In the example of FIG. **19****,** the message **165** is displayed in the performance monitor area **132A** described with reference to FIG. **12****.** Since such a message **165** functions as guidance for conveying a warning related to DPF regeneration to the user, it may be referred to as "DPF warning guidance". While the message **165** is being displayed, the controller **600** temporarily stops displaying the progress information **160.** By hiding the progress information **160,** it becomes easier to direct the user's attention to the message **165,** and the user can be effectively informed that DPF regeneration has been interrupted.

After displaying the message **165,** the controller **600** determines whether the user has performed an operation to clear the message **165** or whether a predetermined time has elapsed since the display of the message **165** (Step **S106).** The clearing operation may be, for example, pressing a specific button on the input device **170.** The predetermined time may be set to any desired time, such as 10 seconds, for example. The predetermined time may typically be set to a value within the range of 5 to 20 seconds, for example. When the user performs the message clearing operation or when the predetermined time has elapsed since the display of the message **165,** the controller **600** ends the display of the message **165** and resumes displaying the progress information **160** (Step **S107).**

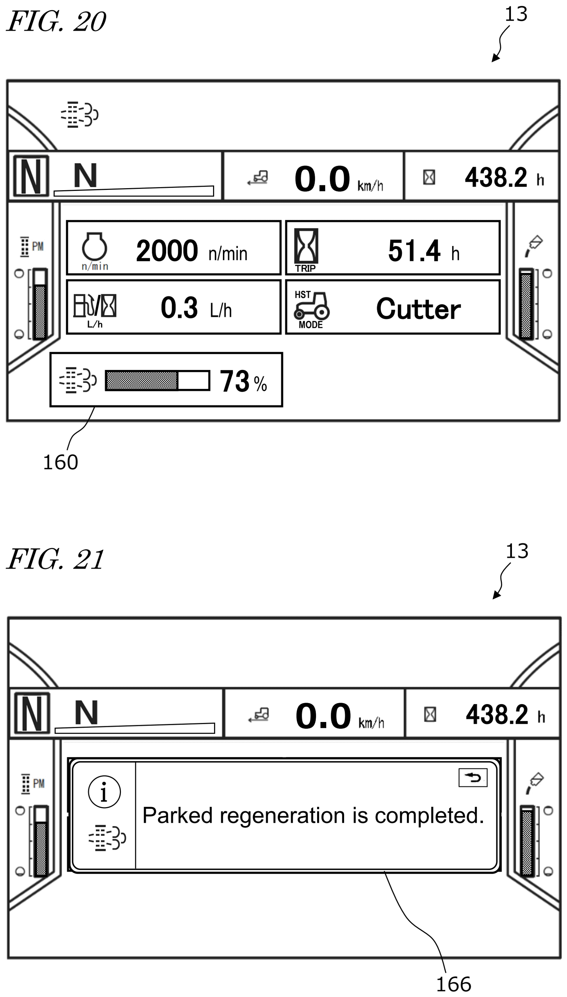

FIG. **20** is a diagram illustrating an example of the display screen when the display of the progress information **160** is resumed. When the display of the message **165** illustrated in FIG. **19** ends, the display of the progress information **160** is resumed as illustrated in FIG. **20****.** With such a display, the user can know, for example, how far DPF regeneration had progressed when it was interrupted.

Next, the controller **600** determines whether a predetermined time (e.g., 5 seconds, 10 seconds, 15 seconds, etc.) has elapsed since the display of the progress information **160** was resumed (Step **S108).** When the predetermined time has elapsed, the controller **600** causes the display **13** to stop displaying the progress information **160** and to display a message indicating that DPF regeneration has ended (Step **S110).**

FIG. **21** is a diagram illustrating an example of a message **166** displayed by the display **13** indicating that DPF regeneration has ended. The user can easily recognize that DPF regeneration has ended by viewing such a message **166.**

After displaying the message **166,** the controller **600** stops displaying the message **166** when the user performs a clearing operation or when a predetermined time (e.g., 10 seconds) has elapsed since the display of the message **166.**

In the above example, in Step **S107,** the display of the message **165** indicating that DPF regeneration has been interrupted is stopped and the display of the progress information **160** is resumed, after which the display of the progress information **160** is stopped after the predetermined time has elapsed and the message **166** indicating the end of DPF regeneration is displayed. Thereafter, when the user again performs the operation to start DPF regeneration, the controller **600** resumes DPF regeneration and executes the operations from Step **S101** onward again. Alternatively, after Step **S107,** instead of proceeding to Steps **S108** and **S110,** the display illustrated in FIG. **20** may be maintained while waiting for the user's operation to resume DPF regeneration.

As described above, according to the present example embodiment, during DPF regeneration, the controller **600** causes the display **13** to display the progress information **160** indicating the progress of DPF regeneration. When a predetermined condition is satisfied while the progress information **160** is being displayed, the controller **600** stops displaying the progress information **160** and causes the display **13** to display a message **165** related to DPF regeneration. For example, when the predetermined condition is satisfied and DPF regeneration is interrupted while the progress information **160** is being displayed, the controller **600** stops displaying the progress information **160** and causes the display **13** to display the message **165** indicating the interruption of DPF regeneration. When the display of the message **165** ends, the controller **600** resumes displaying the progress information **160.** For example, after causing the display **13** to display the message **165,** the controller **600** ends the display of the message **165** and resumes displaying the progress information **160** when a predetermined time (e.g., 10 seconds) has elapsed or in response to an instruction from the user.

Through such operations, it is possible to effectively convey to the user the progress of DPF regeneration and important information related to DPF regeneration such as interruption of DPF regeneration. In particular, by stopping the display of the progress information **160** of DPF regeneration while the messages **164, 165, 166** are being displayed, it becomes easier to direct the user's attention to the displayed message.

Furthermore, in the present example embodiment, the controller **600** causes the display **13** to display traveling state information including the travel direction, transmission state, and vehicle speed of the work vehicle **200.** The controller **600** maintains the display of the traveling state information regardless of whether the progress information **160** is displayed and regardless of whether the messages **164, 165, 166** are displayed. This allows the user to grasp the progress of DPF regeneration together with the traveling state of the work vehicle **200** while DPF regeneration is being performed. Therefore, for example, even when automatic regeneration is performed while the work vehicle **200** is traveling for work, the user can grasp the progress of DPF regeneration while confirming the traveling state.

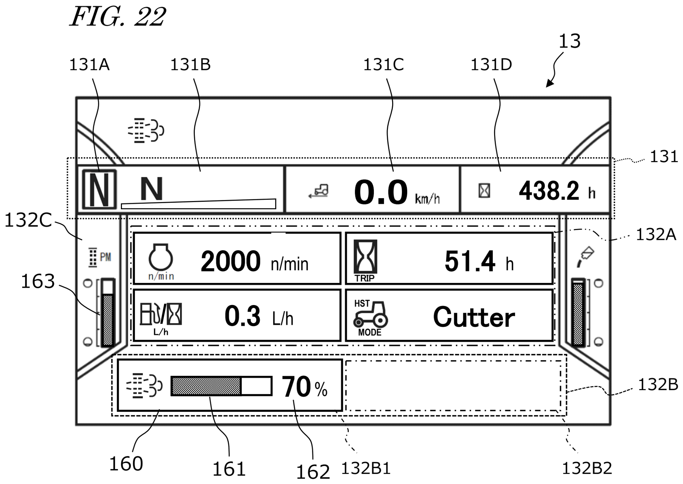

Now, referring to FIG. **22****,** the layout of the display screen including the progress information **160** will be described in more detail. FIG. **22** is a diagram for explaining the layout of the display screen including the progress information **160.** As described with reference to FIG. **12****,** the display **13** (i.e., the digital display) includes a primary area **131,** a performance monitor area **132A,** and a dynamic performance monitor area **132B.** Hereinafter, the primary area **131** is also referred to as a "first display area **131",** the performance monitor area **132A** is also referred to as a "second display area **132A",** and the dynamic performance monitor area **132B** is also referred to as a "third display area **132B".** These display areas **131, 132A, 132B** do not overlap each other. The first display area **131** is a horizontally extending band-shaped area, the second display area **132A** is located below the first display area **131,** and the third display area **132B** is located below the second display area **132A.**

The controller **600** in the present example embodiment causes the first display area **131** to display traveling state information including the travel direction, transmission state, and vehicle speed of the work vehicle **200,** causes the second display area **132A** to display a message related to DPF regeneration, and causes the third display area **132B** to display the progress information **160.** While the message is being displayed, the controller **600** stops displaying the progress information **160** in the third display area **132B** while maintaining the display of the traveling state information to the first display area **131.** This makes the message more prominent, making it easier for the user to focus on the message.

In the example illustrated in FIG. **22****,** the display **13** further includes a fourth display area **132C** adjacent to the second display area **132A** and the third display area **132B.** During DPF regeneration, the controller **600** can cause the fourth display area **132C** to display a gauge **163** indicating that DPF regeneration is in progress. This gauge **163** may be, for example, a bar graph indicating the amount (or level) of PM accumulation. As the DPF regeneration progresses, the bar of the gauge **163** becomes shorter, allowing the user to be informed of the progress of DPF regeneration. Alternatively, the gauge **163** may inform the user that DPF regeneration is in progress through a visual effect in which the bar length repeatedly changes between 100% and 0% in a short cycle during DPF regeneration. By displaying such a gauge **163** together with the progress information **160,** the progress of DPF regeneration can be conveyed to the user more effectively.

The third display area **132B** includes a plurality of sub-areas arranged in the horizontal direction. In the example of FIG. **22****,** two sub-areas **132B1, 132B2** are arranged in the horizontal direction. The number of sub-areas may be three or more. The controller **600** causes the progress information **160** to be displayed in the sub-area closest to the fourth display area **132C** among the plurality of sub-areas. In the example of FIG. **22****,** the fourth display area **132C** is located on the left side of the second display area **132A** and the third display area **132B.** Therefore, the progress information **160** is displayed in the left sub-area **132B1** of the two sub-areas. By displaying the progress information **160** near the gauge **163** in this manner, information related to the progress of DPF regeneration can be consolidated on the display screen and conveyed to the user in a more easily understandable manner. In the example of FIG. **22****,** nothing is displayed in the right sub-area **132B2,** but as illustrated in FIG. **12****,** information other than DPF regeneration information (e.g., PTO speed) may also be displayed.

In the example of FIG. **15****,** DPF regeneration is parked regeneration that is started in response to user operation while the work vehicle **200** is parked, but similar display control may be applied when automatic regeneration is performed. That is, during automatic regeneration, the controller **600** may cause the display **13** to display progress information of DPF regeneration, and when a predetermined condition is satisfied while the progress information is being displayed, stop displaying the progress information, cause the display **13** to display a message related to DPF regeneration, and when the display of the message ends, resume displaying the progress information. In this case, the predetermined condition may include, for example, that the user performs an operation to start parked regeneration during automatic regeneration. In that case, when the predetermined condition is satisfied while the progress information is being displayed, the controller **600** stops displaying the progress information and causes the display **13** to display a message indicating the start of parked regeneration.

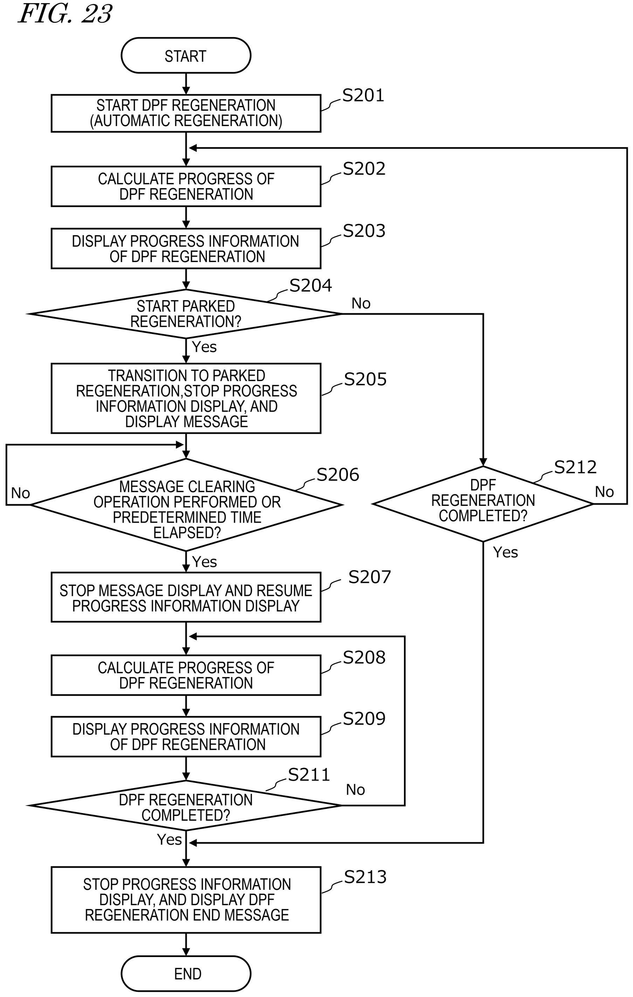

FIG. **23** is a flowchart illustrating an example of the operation of the controller **600** when the user performs an operation to start parked regeneration during automatic regeneration. In this example, first, the controller **600** automatically starts DPF regeneration when the conditions for starting automatic regeneration are satisfied (Step **S201).**

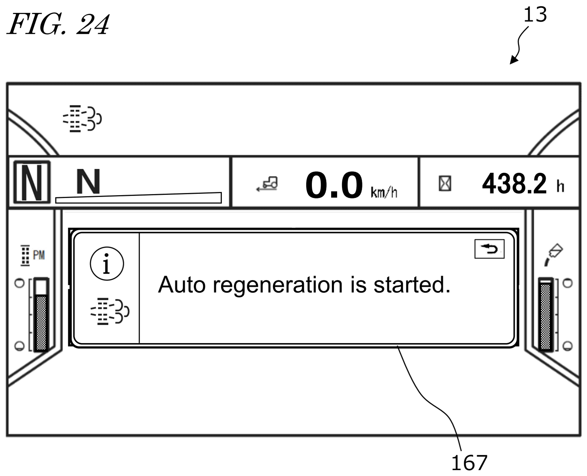

When DPF regeneration is started, the controller **600** causes the display **13** to display information indicating that automatic regeneration has started. For example, as illustrated in FIG. **24****,** a text message **167** indicating that automatic regeneration has started is displayed on the display **13.** This message **167** is cleared from the screen when a predetermined time (e.g., 10 seconds) has elapsed since it was displayed, or when the user performs a clearing operation using the input device **170.**

During automatic regeneration, the controller **600** calculates the progress of DPF regeneration (Step **S202)** and causes the display **13** to display the progress information **160** (Step **S203).** The screen displayed at this point is similar to the display screen illustrated in FIG. **18****.**

Next, the controller **600** determines whether to transition from automatic regeneration to parked regeneration (Step **S204).** When the user turns on the parked regeneration switch **812** while the conditions for starting parked regeneration are satisfied during automatic regeneration, the controller **600** transitions from automatic regeneration to parked regeneration. When the transition to parked regeneration does not occur, the controller **600** determines whether to end DPF regeneration (automatic regeneration) (Step **S212).** The controller **600** ends DPF regeneration when the output value of the sensor **620a** falls below a predetermined value, and proceeds to Step **S213.** When DPF regeneration is to be continued, the process returns to Step **S202.**

When transitioning to parked regeneration, the controller **600** stops displaying the progress information **160** and causes the display **13** to display a message indicating the start of parked regeneration (Step **S205).** The screen displayed at this point is similar to the display screen illustrated in FIG. **16****.**

After displaying the message **164,** the controller **600** determines whether the user has performed an operation to clear the message **164** or whether a predetermined time (e.g., 10 seconds) has elapsed since the display of the message **164** (Step **S206).** When the user performs the message clearing operation or when the predetermined time has elapsed since the display of the message **164,** the controller **600** ends the display of the message **164** and resumes displaying the progress information **160** (Step **S207).**

During parked regeneration, the controller **600** calculates the progress of DPF regeneration (Step **S208)** and causes the display **13** to display the progress information **160** (Step **S209).** The screen displayed at this point is similar to the display screen illustrated in FIG. **18** or FIG. **20****.**

During parked regeneration, the controller **600** determines whether to end DPF regeneration (parked regeneration) (Step **S212).** The controller **600** ends DPF regeneration when the output value of the sensor **620a** falls below a predetermined value, and proceeds to Step **S213.** When DPF regeneration is to be continued, the process returns to Step **S208.**

When DPF regeneration ends, the controller **600** stops displaying the progress information **160** and causes the display **13** to display a message indicating that DPF regeneration has ended (Step **S213).** The screen displayed here is similar to the display screen illustrated in FIG. **21****.**

As described above, in the example illustrated in FIG. **23****,** when a transition from automatic regeneration to parked regeneration is made, the display of the progress information **160** is temporarily stopped, and the message **164** indicating the start of parked regeneration is displayed. Thereafter, when the display of the message **164** ends, the display of the progress information **160** is resumed. Through such operations, it is possible to effectively convey to the user the progress of DPF regeneration and the fact that a transition from automatic regeneration to parked regeneration has occurred.

Note that the operations illustrated in FIG. **23** may be executed in combination with the operations illustrated in FIG. **15****.** For example, after Step **S209** in FIG. **23****,** the determination of Step **S104** in FIG. **15** may be made, and when conditions for interrupting parked regeneration are satisfied, the operations of Steps **S105** to **S108** may be performed.

In the above example, the processor **611a** of the ECU **610a** calculates the PM accumulation amount based on the output value of the differential pressure sensor **620a,** but the PM accumulation amount may be calculated by other methods. For example, the PM accumulation amount may be calculated based on parameters such as engine speed, fuel injection amount, engine temperature, and/or exhaust gas temperature. In that case, information of a table or function representing the relationship between such parameters and PM accumulation amount may be stored in advance in the memory **612a.** The ECU **610a** can calculate the PM accumulation amount using such information.

In the above example, the progress of DPF regeneration is expressed by a numerical value as a percentage, but the progress of DPF regeneration may be presented to the user by other methods. For example, the display **13** may display, as the progress information **160** indicating the progress of DPF regeneration, the remaining time until DPF regeneration ends, or the elapsed time since the start of DPF regeneration. For example, when the time for DPF regeneration (e.g., 15 to 20 minutes) is predetermined, the remaining time or elapsed time may be displayed. Time information indicating the time for DPF regeneration may be stored in advance in the memory **612a.** The processor **611a** can calculate the remaining time and an elapsed time by referring to the time information and counting the time.

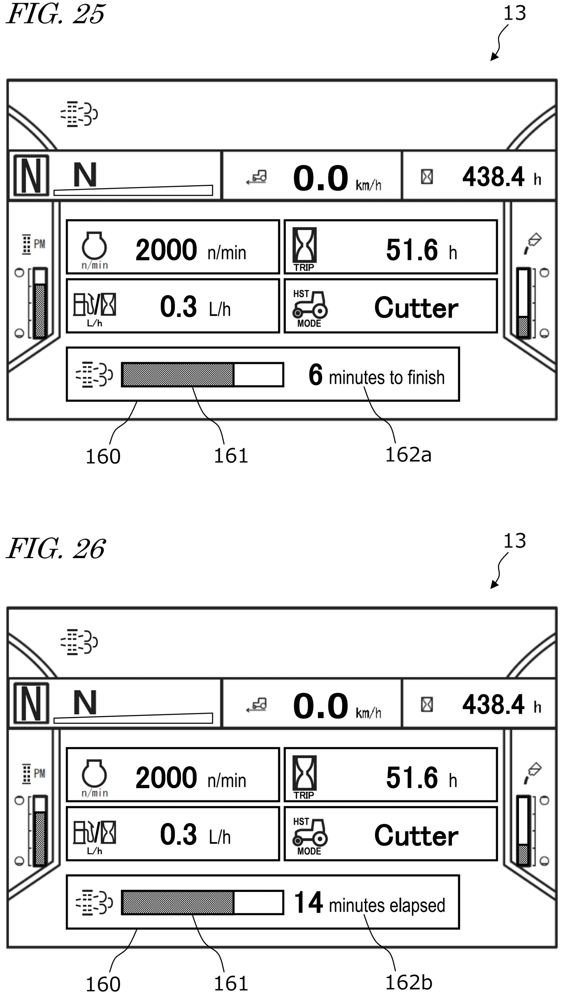

FIG. **25** is a diagram illustrating another display example of progress information **160** indicating the progress of DPF regeneration. In the example illustrated in FIG. **25****,** the progress information **160** expresses the progress of DPF regeneration as the remaining time until DPF regeneration ends. The progress information **160** in this example includes a gauge (bar graph) **161** and text **162a** including a numerical indication of the remaining time. The user can confirm the progress of DPF regeneration by viewing the displayed progress information **160.**

FIG. **26** is a diagram illustrating yet another display example of information **160** indicating the progress of DPF regeneration. In the example illustrated in FIG. **26****,** the progress information **160** expresses the progress of DPF regeneration as the elapsed time since the start of DPF regeneration. The progress information **160** in this example includes a gauge (bar graph) **161** and text **162b** including a numerical indication of the elapsed time. The user can confirm the progress of DPF regeneration by viewing the displayed progress information **160.**

When DPF regeneration ends, the message **166** indicating that DPF regeneration has ended is displayed on the display **13** as illustrated in FIG. **21****.** When the output value of the sensor **620a** falls to the predetermined value earlier than the expected time, the processor **611a** may end the time count and end DPF regeneration.

The various processes executed by the ECU **610a** described above may be performed by the controller **400,** or may be performed cooperatively by the ECU **610a** and the controller **400.**

The information display systems in the above example embodiments can also be retrofitted to work vehicles that do not have such functions. Such systems may be manufactured and sold independently of the work vehicle. Computer programs used in such systems may also be manufactured and sold independently of the work vehicle. The computer program may be provided, for example, stored on a computer-readable non-transitory storage medium. The computer program may also be provided by download via a telecommunication line (e.g., the Internet).

Example embodiments of the present disclosure are widely applicable to various types of work vehicles used in smart agriculture. Example embodiments of the present disclosure are also applicable to work vehicles used for non-agricultural purposes, such as construction work vehicles.

While example embodiments of the present invention have been described above, it is to be understood that variations and modifications will be apparent to those skilled in the art without departing from the scope and spirit of the present invention. The scope of the present invention, therefore, is to be determined solely by the following claims.

As described above, the present disclosure includes the system, method, and computer program described in the following Items.

[Item 1] An information display system for a work vehicle, the information display system comprising:
a meter panel including a digital display; and
a controller configured or programmed to control operation of the meter panel; wherein
the work vehicle includes a diesel particulate filter (DPF) and a sensor to detect an accumulation amount of particulate matter (PM) in the DPF;
during execution of DPF regeneration, the controller is configured or programmed to:
   calculate a degree of progress of the DPF regeneration based on at least one of an output signal from the sensor or an elapsed time;
   cause the digital display to display progress information indicating the calculated degree of progress;
   when a predetermined condition is satisfied during display of the progress information, stop displaying the progress information and instead cause the digital display to display a message relating to the DPF regeneration; and
   when display of the message ends, resume displaying the progress information.

[Item 2] The information display system of Item 1, wherein after causing the digital display to display the message, the controller is configured or programmed to end the display of the message and resume displaying the progress information when a predetermined time has elapsed or in response to an instruction from a user.

[Item 3] The information display system of Item 1 or 2, wherein during execution of the DPF regeneration, the controller is configured or programmed to:
determine whether to interrupt the DPF regeneration based on an output signal from the sensor or another sensor of the work vehicle; and
when interrupting the DPF regeneration, stop displaying the progress information and cause the digital display to display the message.

[Item 4] The information display system of any of Items 1 to 3, wherein the DPF regeneration is parked regeneration that is started in response to a user's operation while the work vehicle is parked;
the predetermined condition includes a condition for interrupting the parked regeneration; and
when the predetermined condition is satisfied and the DPF regeneration is interrupted during display of the progress information, the controller is configured or programmed to stop displaying the progress information and cause the digital display to display a message indicating interruption of the DPF regeneration.

[Item 5] The information display system of Item 1 or 2, wherein the DPF regeneration is automatic regeneration that is automatically started during operation of the work vehicle;
the predetermined condition includes a user operation, during execution of the automatic regeneration, to start parked regeneration that is DPF regeneration performed while the work vehicle is parked; and
when the predetermined condition is satisfied during display of the progress information, the controller is configured or programmed to stop displaying the progress information and cause the digital display to display a message indicating start of the parked regeneration.

[Item 6] The information display system of any of Items 1 to 5, wherein the controller is configured or programmed to:
cause the digital display to display travel state information including information on a traveling direction, a transmission state, and a vehicle speed of the work vehicle; and
maintain the display of the travel state information regardless of whether the progress information is displayed and whether the message is displayed.

[Item 7] The information display system of Item 6, wherein
the digital display includes a first display area, a second display area, and a third display area that do not overlap each other;
the controller is configured or programmed to:
   cause the travel state information to be displayed in the first display area;
   cause the message to be displayed in the second display area;
   cause the progress information to be displayed in the third display area; and
   during display of the message, stop displaying the progress information in the third display area while maintaining the display of the travel state information in the first display area.

[Item 8] The information display system of Item 7, wherein
the first display area is a horizontally extending band-shaped area;
the second display area is located below the first display area; and
the third display area is located below the second display area.

[Item 9] The information display system of Item 8, wherein
the digital display further includes a fourth display area adjacent to the second display area and the third display area; and
during execution of the DPF regeneration, the controller is configured or programmed to cause a gauge indicating that the DPF regeneration is in progress to be displayed in the fourth display area.

[Item 10] The information display system of Item 9, wherein
the third display area includes a plurality of sub-areas arranged in a horizontal direction; and
the controller is configured or programmed to cause the progress information to be displayed in a sub-area closest to the fourth display area among the plurality of sub-areas.

[Item 11] The information display system of any of Items 1 to 10, wherein the controller is configured or programmed to cause information including a gauge indicating the progress and a numerical value representing the progress as a percentage to be displayed on the digital display as the progress information.

[Item 12] A work vehicle comprising the information display system of any of Items 1 to 11.

[Item 13] The work vehicle of Item 12, wherein the work vehicle is a mobile agricultural machine.

[Item 14] A computer-implemented method for causing a digital display in a work vehicle to display information, wherein the work vehicle includes a diesel particulate filter (DPF) and a sensor to detect an accumulation amount of particulate matter (PM) in the DPF, the method comprising:
during execution of DPF regeneration:
calculating a degree of progress of the DPF regeneration based on at least one of an output signal from the sensor or an elapsed time;
causing the digital display to display progress information indicating the calculated degree of progress;
when a predetermined condition is satisfied during display of the progress information, stopping the display of the progress information and instead causing the digital display to display a message relating to the DPF regeneration; and
when display of the message ends, resuming display of the progress information.

[Item 15] A computer program product including a computer program executable by a computer to cause a digital display in a work vehicle to display information, wherein the work vehicle includes a diesel particulate filter (DPF) and a sensor to detect an accumulation amount of particulate matter (PM) in the DPF, the computer program causing the computer to perform, during execution of DPF regeneration:
calculating a degree of progress of the DPF regeneration based on at least one of an output signal from the sensor or an elapsed time;
causing the digital display to display progress information indicating the calculated degree of progress;
when a predetermined condition is satisfied during display of the progress information, stopping the display of the progress information and instead causing the digital display to display a message relating to the DPF regeneration; and
when display of the message ends, resuming display of the progress information.

## Claims

1. An information display system for a work vehicle, the information display system comprising:
a meter panel including a digital display; and
a controller configured or programmed to control operation of the meter panel; wherein
the work vehicle includes a diesel particulate filter (DPF) and a sensor to detect an accumulation amount of particulate matter (PM) in the DPF;
during execution of DPF regeneration, the controller is configured or programmed to:
calculate a degree of progress of the DPF regeneration based on at least one of an output signal from the sensor or an elapsed time;
cause the digital display to display progress information indicating the calculated degree of progress;
when a predetermined condition is satisfied during display of the progress information, stop displaying the progress information and instead cause the digital display to display a message relating to the DPF regeneration; and
when display of the message ends, resume displaying the progress information.

2. The information display system of claim 1, wherein after causing the digital display to display the message, the controller is configured or programmed to end the display of the message and resume displaying the progress information when a predetermined time has elapsed or in response to an instruction from a user.

3. The information display system of claim 1 or 2, wherein during execution of the DPF regeneration, the controller is configured or programmed to:
determine whether to interrupt the DPF regeneration based on an output signal from the sensor or another sensor of the work vehicle; and
when interrupting the DPF regeneration, stop displaying the progress information and cause the digital display to display the message.

4. The information display system of any of claims 1 to 3, wherein the DPF regeneration is parked regeneration that is started in response to a user's operation while the work vehicle is parked;
the predetermined condition includes a condition for interrupting the parked regeneration; and
when the predetermined condition is satisfied and the DPF regeneration is interrupted during display of the progress information, the controller is configured or programmed to stop displaying the progress information and cause the digital display to display a message indicating interruption of the DPF regeneration.

5. The information display system of claim 1 or 2, wherein the DPF regeneration is automatic regeneration that is automatically started during operation of the work vehicle;
the predetermined condition includes a user operation, during execution of the automatic regeneration, to start parked regeneration that is DPF regeneration performed while the work vehicle is parked; and
when the predetermined condition is satisfied during display of the progress information, the controller is configured or programmed to stop displaying the progress information and cause the digital display to display a message indicating start of the parked regeneration.

6. The information display system of any of claims 1 to 5, wherein the controller is configured or programmed to:
cause the digital display to display travel state information including information on a traveling direction, a transmission state, and a vehicle speed of the work vehicle; and
maintain the display of the travel state information regardless of whether the progress information is displayed and whether the message is displayed.

7. The information display system of claim 6, wherein
the digital display includes a first display area, a second display area, and a third display area that do not overlap each other;
the controller is configured or programmed to:
cause the travel state information to be displayed in the first display area;
cause the message to be displayed in the second display area;
cause the progress information to be displayed in the third display area; and
during display of the message, stop displaying the progress information in the third display area while maintaining the display of the travel state information in the first display area.

8. The information display system of claim 7, wherein
the first display area is a horizontally extending band-shaped area;
the second display area is located below the first display area; and
the third display area is located below the second display area.

9. The information display system of claim 8, wherein
the digital display further includes a fourth display area adjacent to the second display area and the third display area; and
during execution of the DPF regeneration, the controller is configured or programmed to cause a gauge indicating that the DPF regeneration is in progress to be displayed in the fourth display area.

10. The information display system of claim 9, wherein
the third display area includes a plurality of sub-areas arranged in a horizontal direction; and
the controller is configured or programmed to cause the progress information to be displayed in a sub-area closest to the fourth display area among the plurality of sub-areas.

11. The information display system of any of claims 1 to 10, wherein the controller is configured or programmed to cause information including a gauge indicating the progress and a numerical value representing the progress as a percentage to be displayed on the digital display as the progress information.

12. A work vehicle comprising the information display system of any of claims 1 to 11.

13. The work vehicle of claim 12, wherein the work vehicle is a mobile agricultural machine.

14. A computer-implemented method for causing a digital display in a work vehicle to display information, wherein the work vehicle includes a diesel particulate filter (DPF) and a sensor to detect an accumulation amount of particulate matter (PM) in the DPF, the method comprising:
during execution of DPF regeneration:
calculating a degree of progress of the DPF regeneration based on at least one of an output signal from the sensor or an elapsed time;
causing the digital display to display progress information indicating the calculated degree of progress;
when a predetermined condition is satisfied during display of the progress information, stopping the display of the progress information and instead causing the digital display to display a message relating to the DPF regeneration; and
when display of the message ends, resuming display of the progress information.

15. A computer program product including a computer program executable by a computer to cause a digital display in a work vehicle to display information, wherein the work vehicle includes a diesel particulate filter (DPF) and a sensor to detect an accumulation amount of particulate matter (PM) in the DPF, the computer program causing the computer to perform, during execution of DPF regeneration:
calculating a degree of progress of the DPF regeneration based on at least one of an output signal from the sensor or an elapsed time;
causing the digital display to display progress information indicating the calculated degree of progress;
when a predetermined condition is satisfied during display of the progress information, stopping the display of the progress information and instead causing the digital display to display a message relating to the DPF regeneration; and
when display of the message ends, resuming display of the progress information.
